(19) Europäisches Patentamt
European Patent Office
Office européen des brevets

(11) EP 3 885 399 A1

(12) **EUROPEAN PATENT APPLICATION**
published in accordance with Art. 153(4) EPC

(43) Date of publication:
**29.09.2021 Bulletin 2021/39**

(21) Application number: **19887293.9**

(22) Date of filing: **07.11.2019**

(51) Int Cl.:
***C08J 9/12*** $^{(2006.01)}$ ***B05D 7/24*** $^{(2006.01)}$

(86) International application number:
**PCT/JP2019/043738**

(87) International publication number:
**WO 2020/105460 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.11.2018 JP 2018219339**

(71) Applicant: **ThreeBond Co., Ltd.**
**Tokyo 192-0398 (JP)**

(72) Inventor: **ENDO, Koichiro**
**Hachioji-shi, Tokyo 192-0398 (JP)**

(74) Representative: **Haseltine Lake Kempner LLP**
**Cheapside House**
**138 Cheapside**
**London EC2V 6BJ (GB)**

(54) **CURABLE COMPOSITION FOR MECHANICAL FOAMING, AND METHOD FOR MANUFACTURING FOAM OF SAME**

(57) Provided is a curable composition for mechanical foaming in which bubbles are evenly dispersed and bubbles do not rise to the liquid surface and from which a foam can be favorably formed when the curable composition for mechanical foaming is mechanically foamed.

A curable composition for mechanical foaming having a complex viscosity η* that satisfies the following conditions (A) and (B) in frequency dependence measurement by a rheometer, in which the curing form of the curable composition for mechanical foaming is not a moisture curing form:
condition (A): η* at 0.1 Hz and 25°C is in a range of 1000 to 50000 Pa·s; and
condition (B): η* at 10.0 Hz and 25°C is in a range of 100 to 1000 Pa·s.

FIG. 1

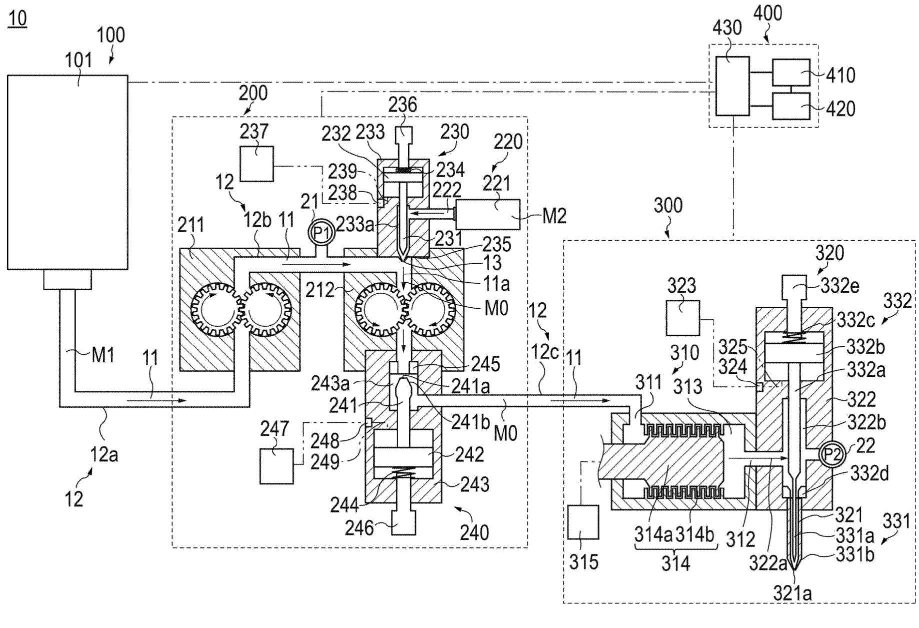




EP 3 885 399 A1

## Description

### TECHNICAL FIELD

The present invention relates to a curable composition suitable for mechanical foaming and a method for manufacturing a foam of the same. More specifically, the present invention relates to a curable composition suitable for mechanical foaming using a gear pump type mechanical foaming apparatus, and a method for manufacturing a foam of the same.

### BACKGROUND ART

Conventionally, as industrial sealing materials and anti-vibration materials, foams obtained by foaming foamable materials containing a liquid resin and the like and curing or solidifying the foamed materials have been used. As a method for producing a foam, chemical foaming in which two liquids of the main agent and the curing agent are mixed and chemically foamed and mechanical foaming in which gas is mechanically mixed into a one-component liquid are known.

Since chemical foaming utilizes a chemical reaction, it is difficult to control the expansion ratio due to the influence of environmental factors such as temperature and humidity. On the other hand, mechanical foaming is not easily affected by environmental factors since gas is mechanically mixed, and control of the expansion ratio can be relatively easily performed. For this reason, it is desired to use mechanical foaming for sealing materials and anti-vibration materials of electronic parts, parts of motor vehicles, and the like, of which the expansion ratio is required to be more accurately controlled.

As the mechanical foaming apparatus, there are mainly a plunger pump type and a gear pump type. Since the gear pump type can quantitatively deliver the liquid, it is easier to control the expansion ratio by the gear pump type than by the plunger pump type.

In WO 2004/060628 A, an invention relating to a one-component curable resin suitable for the above-mentioned mechanical foaming is described. In Examples, the apparent viscosities of one-component thermosetting polyurethane-based, one-component moisture curable polyurethane-based, and one-component moisture curable silicone-based resin materials are measured by a rotational viscometer, and the optimum ranges thereof are set.

### SUMMARY OF INVENTION

However, in WO 2004/060628 A, the one-component curable resin materials are selected from the viewpoint of containing a resin component which can be mechanically foamed using a plunger pump type mechanical foaming apparatus, and only the data obtained by measuring the apparent viscosity by changing the shear velocity is disclosed, but there are no critical factors in the viscosity properties of apparent viscosity and shear velocity. Whether or not a one-component curable resin material can be foamed depends on various requirements. The criticality (possibility of mechanical foaming) should occur when the kinds of resin components such as (meth)acrylic resin, epoxy resin, urethane resin, silicone resin, and thermoplastic resin as well as the viscosity, thixotropy, and curing form of materials containing the resin components, and the like as the requirements are different, but such disclosure is not described at all. In this way, in the technique in which the viscosity is measured by changing the shear velocity of WO 2004/060628 A, only the viscosity and thixotropy are examined, thus the factors (critical factors) which affect the possibility of mechanical foaming, such as the kind of one-component curable resin, additives, fillers and the like, have not been investigated at all, and the technique is applicable only to a specific one-component curable resin material (specifically, one-component curable polyurethane-based resin material) .

Furthermore, since the technique described in WO 2004/060628 A is an invention for forming a foam-molded product, it is not suitable for discharge such as beat coating. However, the fact that discharge is performed (see the claims or the like of WO 2004/060628 A) means that the viscosity of the one-component curable resin material is also required to be low to some extent and the thixotropy is also required to be low to some extent. However, when the viscosity and thixotropy are lowered, there is a problem that bubbles rise to the surface or a plurality of bubbles become one.

As described above, in the technique of WO 2004/060628 A, the bubbles may not be evenly dispersed, the bubbles may rise to the liquid surface when mechanical foaming is performed using a gear pump type mechanical foaming apparatus depending on the kind and curing form of curable resin, or the like, and it can be said that excessive trial and error is inevitable in order to form an optimum foam.

The present invention has been made in view of the above circumstances, and an object thereof is to provide a curable composition for mechanical foaming in which bubbles are evenly dispersed and bubbles do not rise to the liquid surface and from which a foam (a foamed material) can be favorably formed when the curable composition for

mechanical foaming is mechanically foamed.

Another object of the present invention is to provide a method for manufacturing a foam (a foamed material), by which an optimum foam in which bubbles are evenly dispersed, bubbles do not rise to the liquid surface, the foamed state is favorable, and the foamed state from the appearance is also even can be manufactured when mechanical foaming is performed using a mechanical foaming apparatus.

The present invention has the following gist. In the following, (η* at 0.1 Hz)/(η* at 10.0 Hz) is also referred to as η*(0.1 Hz)/η*(10.0 Hz) or a thixotropic ratio. In addition, the parameter represented by η* means a complex viscosity (also referred to as a complex viscosity coefficient).

(1) A curable composition for mechanical foaming having a complex viscosity η* that satisfies the following conditions (A) and (B) in frequency dependence measurement by a rheometer, in which a curing form of the curable composition for mechanical foaming is not a moisture curing form:

condition (A): η* at 0.1 Hz and 25°C is in a range of 1000 to 50000 Pa·s; and
condition (B): η* at 10.0 Hz and 25°C is in a range of 100 to 1000 Pa·s.

(2) The curable composition for mechanical foaming according to (1), which further satisfies the following condition (C):
condition (C): (η* at 0.1 Hz)/(η* at 10.0 Hz) at 25°C is in a range of 70.0 or less.
(3) The curable composition for mechanical foaming according to (1) or (2), in which η* in the conditions (A) and (B) are 1000 to 30000 Pa·s and 100 to 900 Pa·s, respectively.
(4) The curable composition for mechanical foaming according to (2) or (3), in which η*(0.1 Hz)/η*(10.0 Hz) in the condition (C) is 5.0 to 50.
(5) The curable composition for mechanical foaming according to any one of (1) to (4), in which the curable composition for mechanical foaming does not contain a foam stabilizer.
(6) The curable composition for mechanical foaming according to any one of (1) to (5), in which the curing form of the curable composition is at least one selected from the group consisting of a room temperature curing form, a heat curing form, and a photocuring form.
(7) The curable composition for mechanical foaming according to any one of (1) to (6), in which the curable composition for mechanical foaming contains a resin having at least one reactive functional group selected from the group consisting of a vinyl group and a cyclic ether group.
(8) A method for manufacturing a foam (a foamed material) using a mechanical foaming apparatus that produces a foamable material in which a gas is mixed in a liquid and discharges and foams the foamable material, in which the mechanical foaming apparatus includes:

a flow channel that delivers the liquid and the gas;
a liquid supply section that supplies the liquid to the flow channel;
a gas supply unit that supplies the gas to the flow channel;
an on-off valve that can switch a communication state between the flow channel and the gas supply unit;
a first gear pump disposed in the middle of the flow channel;
a second gear pump that is disposed on a downstream side of the flow channel with respect to the first gear pump and mixes the gas into the flow channel and generates a suction pressure for producing the foamable material by being rotationally driven at a speed higher than the first gear pump;
a first pressure sensor that detects a pressure between pumps in the flow channel between the first gear pump and the second gear pump;
a discharge unit including a nozzle having a discharge port that discharges the foamable material in which the gas is mixed in the liquid and a discharge valve main body portion having a communication channel that delivers the foamable material delivered from the second gear pump to the nozzle; and
a control unit that controls the respective sections of the apparatus to perform discharge operation of driving the first gear pump, the second gear pump, and the gas supply unit and opening the on-off valve to discharge the foamable material from the discharge unit and standby operation of stopping work of the first gear pump, the second gear pump, and the gas supply unit and closing the on-off valve to interrupt discharge of the foamable material,
the control unit rotationally drives the second gear pump when the pressure between pumps reaches a preset upper limit pressure during the standby operation and delivers at least a part of the foamable material in the flow channel between the first gear pump and the second gear pump to a downstream side of the second gear pump to decrease a pressure in the flow channel to a pressure lower than the upper limit pressure, and

the liquid is the curable composition for mechanical foaming according to any one of (1) to (7).

**BRIEF DESCRIPTION OF DRAWINGS**

Fig. 1 is a diagram schematically illustrating overall configuration of a mechanical foaming apparatus according to an embodiment of the present invention.
Fig. 2 is a diagram for explaining control of back flow suppression, Fig. 2(A) illustrates a state before control of back flow suppression is started, and Fig. 2(B) illustrates a state in which control of back flow suppression is performed.
Fig. 3 is a diagram for explaining preliminary pressurization, Fig. 3(A) illustrates a state before preliminary pressurization is started, and Fig. 3(B) illustrates a state in which preliminary pressurization is performed.
Fig. 4 is a diagram for explaining configuration of a discharge unit of the mechanical foaming apparatus illustrated in Fig. 1, Fig. 4(A) illustrates the state of discharge unit during discharge operation, Fig. 4(B) illustrates the state of discharge unit during standby operation, and Fig. 4(C) illustrates the state of discharge unit when the nozzle is replaced.
Fig. 5 is a flowchart for explaining a mechanical foaming method according to an embodiment of the present invention.
Fig. 6 is a subroutine flowchart for explaining control of back flow suppression (step S18) in Fig. 5.
Fig. 7 is a subroutine flowchart for explaining preliminary pressurization (step S20) in Fig. 5.
Fig. 8(A) is a graph illustrating the time course of discharge pressure during discharge operation, and Fig. 8(B) is a graph illustrating the time course of discharge pressure during preliminary pressurization.
Fig. 9 is a diagram illustrating the state of a foam discharged in a bead shape under the discharge conditions illustrated in Fig. 8(A), Fig. 9(A) illustrates the state of a foam according to Contrast Example, and Fig. 9(B) illustrates the state of a foam according to an embodiment.
Fig. 10 is a drawing schematically illustrating the status of deformation (strain) per unit area before and after deformation in strain control (CD control) in [Examination of frequency dependence] in Examples.

**DESCRIPTION OF EMBODIMENTS**

Hereinafter, embodiments of the present invention will be described with reference to the attached drawings. Incidentally, the following description does not limit the technical scope and meaning of terms described in the claims. In addition, the dimensional ratios in the drawings are exaggerated for convenience of description and are different from the actual ratios in some cases.

<Curable composition for mechanical foaming>

The curable composition for mechanical foaming according to the present invention has the features in that : the curable composition for mechanical foaming has a complex viscosity η* that satisfies the following conditions (A) and (B) in frequency dependence measurement by a rheometer, and the curing form of the curable composition for mechanical foaming is not a moisture curing form (first embodiment):

condition (A): η* at 0.1 Hz and 25°C is in a range of 1000 to 50000 Pa·s; and
condition (B): η* at 10.0 Hz and 25°C is in a range of 100 to 1000 Pa·s.

According to the curable composition for mechanical foaming according to the present invention, bubbles are evenly dispersed and bubbles do not rise to the liquid surface when the curable composition for mechanical foaming is mechanically foamed and a foam can be favorably formed.

<Condition (A)>

In the curable composition for mechanical foaming of the present embodiment, condition (A): η* at 0.1 Hz and 25°C is in a range of 1000 to 50000 Pa·s in the frequency dependence measurement by a rheometer. When η* at 0.1 Hz and 25°C is in the above range, it is excellent in that the effects of the invention described above can be effectively exerted. From this point of view, η* at 0.1 Hz and 25°C is preferably in a range of 1000 to 30000 Pa·s, more preferably in a range of 1500 to 22000 Pa·s.

<Condition (B)>

In the curable composition for mechanical foaming of the present embodiment, condition (B): η* at 10.0 Hz and 25°C is in a range of 100 to 1000 Pa·s together with (A) above in the frequency dependence measurement by a rheometer. When η* at 10.0 Hz and 25°C is in the above range, it is excellent in that the effects of the invention described above can be effectively exerted. From this point of view, η* at 10.0 Hz and 25°C is preferably in a range of 100 to 900 Pa·s, more preferably in a range of 125 to 750 Pa·s.

<Condition (C)>

In the curable composition for mechanical foaming of the present embodiment, it is further preferable that condition (C): (η* at 0.1 Hz)/(η* at 10.0 Hz) at 25°C is in a range of 70.0 or less. When the conditions (A) and (B) are satisfied and (η* at 0.1 Hz)/(η* at 10.0 Hz) at 25°C is in a range of 70.0 or less, it is excellent in that the effects of the invention described above can be effectively exerted. From this point of view, (η* at 0.1 Hz)/(η* at 10.0 Hz) in the condition (C) is preferably in a range of 5.0 to 50, more preferably in a range of 5.0 to 43.

<Frequency dependence measurement (complex viscosity η* measurement) of curable composition for mechanical foaming by rheometer>

The η* (complex viscosity) of the curable composition for mechanical foaming of the present invention (in the state before foaming and before curing) can be determined by frequency dependence measurement by a rheometer. For details, the viscosity at each frequency (f (Hz)) in a 25°C atmosphere adjusted by a temperature control facility is measured using the rheometer HAAKE MARS III manufactured by Thermo Fisher Scientific, Inc. as a rheometer and P35 as a rotor. In order to perform optimum measurement, for example, the measurement was performed on the sample of the curable composition for mechanical foaming used in Examples by setting the rotor gap to 0.5 mm or 1 mm and the measurement mode to strain control (CD control) (0.05 to 0.5%) or stress control (CS control) (1 to 30 Pa) (see Table 2 in Examples), but the conditions are not necessarily limited to these set conditions. Incidentally, the rheometer is not limited to the HAAKE MARS III, and other commercially available products may be used. Similarly, the rotor is not limited to the P35, and other commercially available products may be used.

The following is performed in order to "perform optimum measurement" described above. Since the measurement is performed in a linear region, the range is required to be set. Since the stress to be the end of the linear region differs depending on the frequency, first the shear stress (yield stress) at the yield point in the linear region is determined from the relation of horizontal axis: shear stress-vertical axis: storage elastic modulus at each frequency. When the stress (Pa) is determined, the strain (%) is also determined. The measurement is performed in a linear region in the range of this yield stress.

A strain sensor and a stress sensor are installed in the rheometer HAAKE MARS III, and strain control (CD control) and stress control (CS control) can be optimally used depending on the curable composition for mechanical foaming. The same value is output if the measurement can be performed using either one. In strain control, the unit is expressed as "%" since a numerical value obtained by multiplying the dimensionless number (angle θ° in Fig. 10) by 100 is used since the value is strain per unit area. In stress control, the unit is expressed as "Pa" since the value is shear stress per unit area. Fig. 10 is a drawing schematically illustrating the status (deformation amount: Δ1, deformation angle: θ) of the object before deformation (Fig. 10(a)) and after deformation (Fig. 10(b)) when a load (dynamic stress) is applied in the direction of the arrow indicated in the xy coordinate diagram (direction from (0,1) toward (1,1) coordinates in the xy coordinate) in a case in which the cross section of a cubic object (curable composition for mechanical foaming) is displayed on the xy coordinates with a side length of 1.

The following is performed in order to "optimally use strain control (CD control) and stress control (CS control) depending on the curable composition for mechanical foaming" described above. In general, the measurement is performed by switching the measurement mode to CS control in a case in which optimum measurement cannot be performed when the measurement is performed in CD control. Lissajous figure (also called waveform) is observed to judge whether the measurement can be performed. Lissajous figure refers to a figure in which the relation between stress and strain in one cycle (reciprocating) is drawn in two-dimensional coordinates since dynamic strain is generated when a dynamic stress is applied to an object. The minor-major axis ratio of ellipse is closer to 1 as the strain delay (phase difference) with respect to the stress is greater, and a figure having the ratio closer to 0 is formed as the phase difference is smaller. Commercially available curable compositions such as those used in Examples and Comparative Examples have a phase difference of around 0.5. As described above, it is examined whether the measurement can be optimally performed from the deviation and the shape of the figure. After that, the linear region can be confirmed from the yield stress described above.

The curing form of the curable composition for mechanical foaming of the present invention is not particularly

limited as long as it is not a moisture curing form (as long as it does not have a moisture curability). It is not preferable that the curing form of the curable composition for mechanical foaming is a moisture curing form since the appearance of the foamed state after mechanical foaming (before curing) using the curable composition for mechanical foaming as a liquid is poor and the foamed state after mechanical foaming and after curing is poor. As the curing form of the curable composition for mechanical foaming of the present invention, for example, at least one form selected from the group consisting of a room temperature curing form, a heat curing form, and a photocuring form is preferable. Photocuring form is more preferable since the appearance of foamed state after mechanical foaming (before curing) and the foamed state after mechanical foaming and after curing are excellent, there is no limitation on the pot life when mechanical foaming is performed, and handling is easy. In the case of a curing form of the room temperature curing form, the pot life is fixed since the viscosity increases after mixing of the curable composition for mechanical foaming and the gas, but the mixture can be fully utilized within the pot life.

Here, the following compositions correspond to those that have a moisture curing form as the curing form of curable composition for mechanical foaming and are excluded from the present invention. In other words, (1) a composition containing a resin (compound) having a hydrolyzable silyl group and a moisture curable catalyst (mainly a tin catalyst, a titanium catalyst, and a zirconium catalyst) and (2) a composition containing a resin (compound) having an isocyanate group, a polyol, and a moisture curable catalyst (mainly a tin catalyst, a titanium catalyst, and a zirconium catalyst) correspond to the composition having a moisture curing form (the composition having a moisture curability). These compositions (1) and (2) are those (compositions having a moisture curing form) that have a moisture curing form as the curing form of curable composition for mechanical foaming and are excluded from the curable composition for mechanical foaming of the present invention.

The curable composition for mechanical foaming according to the present invention is required to have the above-described viscosity properties although the kind and curing type of the resin except the moisture curable resin are not limited at all. The curable composition for mechanical foaming according to the present invention is useful for use in a mechanical foaming apparatus capable of stably obtaining a desired expansion ratio by preventing the resin and foamable material from flowing back to the gas supply unit when the operation state is switched from the standby operation to the discharge operation to be described later in the paragraph of the method for manufacturing a foam according to the present invention.

The curable composition for mechanical foaming refers to a composition which is a one-component type before use, exhibits a viscous paste state with high viscosity in a heated state, and has a mechanism of curing by reaction as the progress of curing, a mechanism in which the composition is solidified when cooled from a heated molten state to room temperature, or a mechanism of cross-linking and curing by thermal energy, light, radiation energy, or the like, and the like. Examples thereof include compositions which are heat curing type, hot melt type, sol-gel type, vulcanization curing type, and light/radiation curing type, contain polyurethane-based, silicone-based, epoxy-based, synthetic rubber-based, polyolefin-based, polyester-based, acrylic resin-based, polyvinyl chloride-based, and other thermoplastic plastics or elastomers as components, and use monomers, oligomers, polymers or the like of thermoplastic or thermosetting materials.

The curable composition for mechanical foaming may be any one as long as it is a curable composition for mechanical foaming which has a complex viscosity η* satisfying the conditions (A) and (B) in the frequency dependence measurement by a rheometer and in which the curing form of the curable composition for mechanical foaming is not a moisture curing form, and a one-component composition in which all the components are already mixed and a composition which is composed of a plurality of preparations and in which the preparations are mixed before use can also be used. The composition composed of a plurality of preparations is preferably a two-component type. Examples of the curing form of one-component composition include a heat curing form, a photocuring form, and a room temperature curing form (anaerobic curing form), and the like, and there are a room temperature curing form in which a plurality of preparations are mixed and then cured and the like as the curing form of two-component composition, but the curing form is not limited to these.

Examples of the one-component heat curing (thermosetting) composition include a composition containing a compound having a (meth)acryloyl group and an organic peroxide, a composition containing a compound having a cyclic ether group and a curing agent and/or a curing accelerator, a composition containing a compound having an allyl group or a vinyl siloxane group, a cross-linking agent, and a catalyst, a composition of a compound having an isocyanate group and a curing agent, and the like. As the main skeleton of each compound, various skeletons such as a polyurethane skeleton; a polyether skeleton; a polyester skeleton; a polycarbonate skeleton; a polyurethane-modified skeleton; a polyepoxy-modified skeleton; a polyurea skeleton; a polyorganosiloxane skeleton; polyolefin skeletons such as a polybutadiene skeleton, a polyisoprene skeleton, and a polyisobutylene skeleton; a poly(meth)acrylate skeleton, and hydrogenated skeletons thereof can be used, but the main skeleton is not limited to these.

Examples of the one-component photocurable composition include a composition containing a compound having a (meth)acryloyl group and a photoinitiator, a composition containing a compound having a cyclic ether group (including a cyclic thioether group) and a photoacid generator, and the like. As the main skeleton of each compound,

various skeletons such as a polyurethane skeleton; a polyether skeleton; a polyester skeleton; a polycarbonate skeleton; a polyurethane-modified skeleton; a polyepoxy-modified skeleton; a polyurea skeleton; a polyorganosiloxane skeleton; polyolefin skeletons such as a polybutadiene skeleton, a polyisoprene skeleton, and a polyisobutylene skeleton; a poly(meth)acrylate skeleton, and hydrogenated skeletons thereof can be used, but the main skeleton is not limited to these.

Examples of the one-component anaerobic curable composition include a composition containing a compound having a (meth)acryloyl group, an organic peroxide, and an anaerobic catalyst. As the main skeleton of each compound, various skeletons such as a polyurethane skeleton; a polyether skeleton; a polyester skeleton; a polycarbonate skeleton; a polyurethane-modified skeleton; a polyepoxy-modified skeleton; a polyurea skeleton; a polyorganosiloxane skeleton; polyolefin skeletons such as a polybutadiene skeleton, a polyisoprene skeleton, and a polyisobutylene skeleton; a poly(meth)acrylate skeleton, and hydrogenated skeletons thereof can be used, but the main skeleton is not limited to these.

Examples of the two-component curable composition include a composition in which a compound having a (meth)acryloyl group, an organic peroxide, and a metal catalyst are divided into a plurality of preparations, a composition in which a compound having a cyclic ether group and a curing agent and/or a curing accelerator are divided into a plurality of preparations, a composition in which a compound having an allyl group or a vinyl siloxane group, a cross-linking agent, and a catalyst are divided into a plurality of preparations, and the like. As the main skeleton of each compound, various skeletons such as a polyurethane skeleton; a polyether skeleton; a polyester skeleton; a polycarbonate skeleton; a polyurethane-modified skeleton; a polyepoxy-modified skeleton; a polyurea skeleton; a polyorganosiloxane skeleton; polyolefin skeletons such as a polybutadiene skeleton, a polyisoprene skeleton, and a polyisobutylene skeleton; a poly(meth)acrylate skeleton, and hydrogenated skeletons thereof can be used, but the main skeleton is not limited to these. In addition, the two-component curable composition can also be left at room temperature to gel and then heated as well as curability such as photocurability and anaerobic curability can be imparted to the two-component curable composition.

Fillers such as an inorganic filler and an organic filler can be appropriately added to the curable composition for mechanical foaming in order to adjust the viscosity and thixotropy. As the amount of filler added, the filler can be added at 0.001 to 1000 parts by mass relative to 100 parts by mass of the resin component. The average particle size of fillers is preferably 0.001 to 100 $\mu$m, more preferably 0.01 to 50 $\mu$m, particularly preferably 0.1 to 20 $\mu$m from the viewpoint of ease of dispersion and further from the viewpoint of being able to easily adjust the complex viscosity $\eta^*$ satisfying the above conditions (A) and (B) of the curable composition for mechanical foaming. Incidentally, the method for measuring the average particle size includes a laser diffraction method, a SEM (scanning electron microscope) method, and the like but is not limited to these.

The curable composition for mechanical foaming of the present invention has at least one curing form selected from the group consisting of a room temperature curing form such as a two-component curing form and an anaerobic curing form (excluding a moisture curing form), a heat curing form, and a photocuring form that are the most favorable curing forms, and is therefore useful and versatile. The curable composition for mechanical foaming of the present invention preferably contains a resin having at least one reactive functional group selected from the group consisting of a vinyl group (for example, a (meth)acrylic group, an allyl group, a vinyl siloxane group, a vinyl ether group, or the like) and a cyclic ether group (for example, an epoxy group, a glycidyl group, an oxetanyl group, an oxetane group, or the like), of which the curing form can be freely changed.

Examples of the resin (compound) having a vinyl group, which can be used in the present invention, include resins (compounds) having a (meta)acryloyl group (hereinafter, an acryloyl group and a methacryloyl group are collectively referred to as a (meth)acryloyl group, and a compound having a (meth)acryloyl group is also referred to as a (meth)acrylate), a (meta)acrylamide group (hereinafter, an acrylamide group and a methacrylamide group are collectively referred to as a (meth)acrylamide group), and the like, but are not limited to these.

Specific examples of the (meth)acrylate oligomer include a (meth)acrylate oligomer having an ester bond in the molecule, a (meta)acrylate oligomer having an ether bond, a (meth)acrylate oligomer having a urethane bond, an epoxy-modified (meth)acrylate oligomer (acryl-modified compound with terminal epoxy group), and the like, and the main skeleton thereof includes bisphenol A, novolak phenol, polybutadiene, polyester, polyether, and the like but is not limited to these. A urethane-modified (meth)acrylate oligomer is particularly preferable from the viewpoint of improvement in adhesive strength. This oligomer is synthesized, for example, from the reaction product of a polyol compound having two or more hydroxyl groups in the molecule, a compound having two or more isocyanate groups in the molecule, and a (meth) acrylate containing at least one or more hydroxyl groups in the molecule. Examples of the compound having two or more isocyanate groups in the molecule include an aromatic polyisocyanate, an alicyclic polyisocyanate, an aliphatic polyisocyanate, and the like. Among these, an aliphatic polyisocyanate and an alicyclic polyisocyanate are preferable from the viewpoint of obtaining a flexible cured product. These may be used singly, or a plurality of these may be used in combination.

Examples of the polyol compound having two or more hydroxyl groups in the molecule, which is used in oligomer

synthesis, include polyether polyol, polyester polyol, caprolactone diol, bisphenol polyol, polyisoprene polyol, hydrogenated polyisoprene polyol, polybutadiene polyol, hydrogenated polybutadiene polyol, castor oil polyol, polycarbonate diol, polysilanol, and the like. Among these, polycarbonate diol, polybutadiene polyol, and hydrogenated polybutadiene polyol are preferable since these exhibit excellent transparency and excellent durability, and polycarbonate diol is particularly preferably mentioned from the viewpoint that the cured product does not become cloudy in a high temperature and high humidity atmosphere. These may be used singly, or a plurality of these may be used in combination.

As the compound having two or more isocyanate groups in the molecule for oligomer synthesis, there are an aromatic polyisocyanate and an aliphatic polyisocyanate. Examples of the aromatic polyisocyanate include 2,4-tolylene diisocyanate, 2,6-tolylene diisocyanate, 1,3-xylylene diisocyanate, 1,4-xylylene diisocyanate, tetramethylxylylene diisocyanate, diphenylmethane diisocyanate, naphthalene-1,5-disocyanate, triphenylmethane triisocyanate, and the like. Examples of the alicyclic polyisocyanate include isophorone diisocyanate, bis(4-isocyanatocyclohexyl)methane, 1,3-bis(isocyanatomethyl)cyclohexane, 1,4-bis(isocyanatomethyl)cyclohexane, norbornane diisocyanate, bicycloheptane triisocyanate, and the like. Examples of the aliphatic polyisocyanate include hexamethylene diisocyanate, 1,3,6-hexamethylene triisocyanate, 1,6,11-undecatriisocyanate, and the like. Among these, diisocyanates such as isophorone diisocyanate and hexamethylene diisocyanate are preferable.

Examples of the (meth)acrylate containing at least one or more hydroxyl groups in the molecule, which is used in oligomer synthesis, include mono(meth)acrylates of dihydric alcohols such as ethylene glycol, propylene glycol, 1,3-propanediol, 1,3-butanediol, 1,4-butanediol, and polyethylene glycol, mono(meth)acrylates or di(meth)acrylates of trihydric alcohols such as trimethylolethane, trimethylolpropane, and glycerin, and the like. Among these, mono(meth)acrylates of dihydric alcohols are preferable and mono(meth)acrylate of ethylene glycol is more preferable from the viewpoint of obtaining a cured product exhibiting excellent flexibility. These may be used singly, or a plurality of these may be used in combination.

The method for synthesizing the urethane-modified (meth)acrylate oligomer is not particularly limited, and a known method can be used. Examples thereof include a method in which a polyol compound having two or more hydroxyl groups in the molecule and an isocyanate compound having two or more isocyanate groups in the molecule are reacted at a proportion of preferably 3 : 1 to 1 : 3, still more preferably 2 : 1 to 1 : 2 as a molar ratio (polyol compound : isocyanate compound) in a diluent (for example, methyl ethyl ketone, methoxyphenol, or the like) to obtain a urethane prepolymer. Subsequently, the isocyanate group remaining in the obtained urethane prepolymer is further reacted with a (meth)acrylate containing at least one or more hydroxyl groups in the molecule in an amount sufficient to react with this isocyanate group to synthesize a urethane (meth)acrylate oligomer.

Examples of the catalyst used at the time of synthesis include lead oleate, tetrabutyltin, antimony trichloride, triphenylaluminum, trioctylaluminum, dibutyltin dilaurate, copper naphthenate, zinc naphthenate, zinc octylate, zinc octenoate, zirconium naphthenate, cobalt naphthenate, tetra-n-butyl-1,3-diacetyloxydistanoxane, triethylamine, 1,4-diaza[2,2,2]bicyclooctane, N-ethylmorpholine and the like. Among these, dibutyltin dilaurate, zinc naphthenate, zinc octylate, and zinc octenoate are preferably used since the curable composition can exhibit high activity and a cured product exhibiting excellent transparency can be obtained. It is preferable to use these catalysts at 0.0001 to 10 parts by mass relative to 100 parts by mass of the total amount of reactants. In addition, it is preferable to conduct the reaction at a reaction temperature of usually 10 to 100°C, particularly 30 to 90°C. As the urethane-modified (meth)acrylate oligomer, one diluted with a solvent or the following monomer at the raw material stage may be used.

A compound having a main skeleton formed of a polymer of a (meth)acrylic monomer and at least two (meth)acryloyl groups in the molecule can also be used as an oligomer. In the oligomer, reactive (meth)acryloyl groups may remain and be present on either of the side chain and/or the terminal of the molecule but are preferably present at both terminals of the main chain from the viewpoint of rubber elasticity and flexibility.

The (meth)acrylic monomer is not particularly limited, and various kinds can be used. The (meth)acrylic monomer is a general term for monomers having an acryloyl group or a methacryloyl group. Examples thereof include (meth)acrylic acid, methyl (meth)acrylate, ethyl (meth)acrylate, (meth)acrylic acid esters, (meth)acrylic acid-n-propyl, isopropyl (meth)acrylate, (meth)acrylic acid-n-butyl, isobutyl (meth)acrylate, (meth)acrylic acid-t-butyl, (meth)acrylic acid-n-pentyl, (meth)acrylic acid-n-hexyl, cyclohexyl (meth)acrylate, (meth)acrylic acid-n-heptyl, (meth)acrylic acid-n-octyl, (meth)acrylic acid-2-ethylhexyl, nonyl (meth)acrylate, decyl (meth)acrylate, dodecyl (meth)acrylate, phenyl (meth)acrylate, toluyl (meth)acrylate, benzyl (meth)acrylate, (meth)acrylic acid-2-methoxyethyl, (meth)acrylic acid-3-methoxybutyl, (meth)acrylic acid-2-hydroxyethyl, (meth)acrylic acid-2-hydroxypropyl, stearyl (meth)acrylate, glycidyl (meth)acrylate, 2-aminoethyl (meth)acrylate, γ-(methacryloyloxypropyl)trimethoxysilane, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, 2-perfluorohexadecylethyl (meth)acrylate and the like, but are not limited to these. In the present invention, polymerization can be performed by selecting monomers from the (meth)acrylic monomers, but it is preferable to select a (meth)acrylic monomer having a hydrocarbon group.

The lower limit of the number average molecular weight (Mn) of the compound having a main skeleton formed of a polymer of a (meth) acrylic monomer and at least two (meth)acryloyl groups in the molecule is 500, preferably 3000, and the upper limit thereof is 100,000, preferably 50,000. The elasticity of the cured product of the curable composition for mechanical foaming is sufficiently exerted when the number average molecular weight is 500 or more, and the viscosity does not become too high and stringing can be prevented when the curable composition for mechanical foaming is discharged when the number average molecular weight is 100,000 or less. The molecular weight (number average molecular weight, weight average molecular weight, or the like) can be measured by gel permeation chromatography (GPC) using polystyrene as a standard substance.

The compound having a main skeleton formed of a polymer of a (meth)acrylic monomer and at least two (meth)acryloyl groups in the molecule can be obtained by various polymerization methods, and the method is not particularly limited, but a radical polymerization method is preferable from the viewpoint of versatility of the monomer and ease of reaction control. Among the radical polymerizations, controlled radical polymerization is preferable, living radical polymerization is more preferable, and atom transfer radical polymerization is particularly preferable. In addition, examples of the method for introducing a (meth)acryloyl group into the polymer of a (meth)acrylic monomer that is the main chain include (1) a method by the reaction of a vinyl-based polymer having a hydroxyl group at the terminal with a chlorine, bromine, or hydroxyl group-containing (meth)acrylate compound, (2) a method by the reaction of a vinyl-based polymer having a halogen group at the terminal with an alkali metal ion or quaternary ammonium ion-containing (meth)acrylate compound, (3) a method in which the compound is obtained by reacting a diisocyanate compound with a vinyl-based polymer having a hydroxyl group at the terminal and reacting residual isocyanate groups with a hydroxyl group-containing (meth)acrylate, and the like. These methods are already known methods and are described in JP S61-133201 A, JP H11-80250 A, JP 2000-38404 A, JP 2001-271055 A, JP 2002-69121 A, and the like.

In the curable composition for mechanical foaming of the present invention, a monomer can be used together with the oligomer including the urethane-modified oligomer and the like, and examples thereof include monofunctional, bifunctional, trifunctional, and tetrafunctional or higher polyfunctional monomers. A (meth)acrylate monomer is preferable, and a bifunctional (meth)acrylate monomer is particularly preferable. The molecular weight of the monomer is preferably 10000 or less, more preferably 5000 or less, most preferably 1000 or less in order to decrease the viscosity of the curable composition for mechanical foaming.

Examples of the monofunctional monomer include lauryl (meth)acrylate, stearyl (meth)acrylate, tetrahydrofurfuryl (meth)acrylate, caprolactone-modified tetrahydrofurfuryl (meth)acrylate, cyclohexyl (meth)acrylate, dicyclopentanyl (meth)acrylate, isobornyl (meth)acrylate, benzyl (meth)acrylate, phenyl (meth)acrylate, phenoxyethyl (meth)acrylate, phenoxydiethylene glycol (meth)acrylate, phenoxytetraethylene glycol (meth)acrylate, nonylphenoxyethyl (meth)acrylate, butoxyethyl (meth)acrylate, 2-hydroxyethyl (meth)acrylate, 2-hydroxypropyl (meth)acrylate, glycerol (meth)acrylate, modified butyl (meth)acrylate, epichlorohydrin-modified phenoxy (meth)acrylate, N,N-dimethylaminoethyl (meth)acrylate, N,N-diethylaminoethyl (meth)acrylate, morpholino (meth)acrylate, and the like.

Examples of the bifunctional monomer include neopentyl glycol di(meth)acrylate, bisphenol A di(meth)acrylate, epichlorohydrin-modified bisphenol A di(meth)acrylate, stearic acid-modified pentaerythritol di(meth)acrylate, dicyclopentenyl diacrylate, di(meth)acryloyl isocyanurate, and the like.

Examples of the trifunctional monomer include trimethylolpropane tri(meth)acrylate, pentaerythritol tri(meth)acrylate, epichlorohydrin-modified trimethylolpropane tri(meth)acrylate, epichlorohydrin-modified glycerol tri(meth)acrylate, tris(acryloyloxyethyl) isocyanurate, and the like.

Examples of the polyfunctional monomer include ditrimethylolpropane tetra(meth)acrylate, pentaerythritol tetra(meth)acrylate, dipentaerythritol monohydroxypenta(meth)acrylate, alkyl-modified dipentaerythritol pentaacrylate, dipentaerythritol hexa(meth)acrylate, and the like. These polymerizable monomers can be used singly or two or more kinds thereof can be used in mixture.

Examples of the (meth)acrylamide monomer include dimethylacrylamide, acryloylmorpholine, diethylacrylamide, and the like, but are not limited to these. Diethyl acrylamide or dimethyl acrylamide is preferable when the price and availability are taken into consideration. As specific examples, DMAA (registered trademark), ACMO (registered trademark), DEAA (registered trademark) manufactured by KJ Chemicals Corporation, and the like are known, but the monomer is not limited to these.

Photocurability can be imparted by adding a photoinitiator to the (meth)acryloyl group. Examples thereof include an acetophenone-based photoinitiator, a benzoin-based photoinitiator, a benzophenone-based photoinitiator, a thioxanthone-based photoinitiator, an acylphosphine oxide-based photoinitiator, and the like. These may be used singly or two or more kinds thereof may be used concurrently. When an acylphosphine oxide photoinitiator, which is easily cured by energy rays in the visible light region, is added to the curable composition for mechanical foaming, the curable composition for mechanical foaming itself is likely to turn yellow, but it is preferable to contain an acylphosphine oxide photoinitiator since the photocurability is improved.

Examples of the acetophenone-based photoinitiator include diethoxyacetophenone, 2-hydroxy-2-methyl-1-phenylpropan-1-one, benzyl dimethyl ketal, 4-(2-hydroxyethoxy)phenyl-(2-hydroxy-2-propyl) ketone, 1-hydroxycyclohexylphenyl ketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1-methylvinyl)phenyl]propanone oligomer, and the like, but are not limited thereto.

Examples of the benzoin-based photoinitiator include benzoin, benzoin methyl ether, benzoin ethyl ether, benzoin isopropyl ether, benzoin isobutyl ether, and the like, but are not limited thereto.

Examples of the benzophenone-based photoinitiator include benzophenone, methyl o-benzoyl benzoate, 4-phenylbenzophenone, 4-benzoyl-4'-methyl-diphenylsulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzenemethanaminium bromide, (4-benzoylbenzyl)trimethylammonium chloride, and the like, but are not limited thereto.

Examples of the thioxanthone-based photoinitiator include 2-isopropylthioxanthone, 4-isopropylthioxanthone, 2,4-diethylthioxanthone, 2,4-dichlorothioxanthone, 1-chloro-4-propoxythioxanthone, 2-(3-dimethylamino-2-hydroxy)-3,4-dimethyl-9H-thioxanthone-9-one mesochloride, and the like, but are not limited thereto.

Examples of the acylphosphine oxide-based photoinitiator include bis(2,4,6-trimethylbenzoyl)-phenylphosphine oxide, 2,4,6-trimethylbenzoyldiphenylphosphine oxide, 2,4,6-trimethylbenzoylphenylethoxyphosphine oxide, and the like, but are not limited thereto.

Thermosetting property (heat curing property) can also be imparted when an organic peroxide is added to the (meth)acryloyl group. Specific examples of the organic peroxide include ketone peroxides such as methyl ethyl ketone peroxide, cyclohexanone peroxide, 3,3,5-trimethylcyclohexanone peroxide, methylcyclohexanone peroxide, methyl acetatoacetate peroxide, and acetylacetone peroxide; peroxyketals such as 1,1-bis(t-butylperoxy)-3,3,5-trimethylcyclohexane, 1,1-bis(t-butylperoxy)cyclohexane, 2,2-bis(t-butylperoxy)octane, n-butyl-4,4-bis(t-butylperoxy)valerate, and 2,2-bis (t-butylperoxy) butane; hydroperoxides such as t-butyl hydroperoxide, cumene hydroperoxide, diisopropylbenzene hydroperoxide, p-menthane hydroperoxide, 2,5-dimethylhexane-2,5-dihydroperoxide, and 1,1,3,3-tetramethylbutylhydroperoxide; dialkyl peroxides such as di-t-butyl peroxide, t-butylcumyl peroxide, dicumyl peroxide, $\alpha,\alpha'$-bis(t-butylperoxy-m-isopropyl)benzene, 2,5-dimethyl-2,5-di(t-butylperoxy)hexane, and 2,5-dimethyl-2,5-di(t-butylperoxy)-3-hexin; diacyl peroxides such as acetyl peroxide, isobutyryl peroxide, octanoyl peroxide, decanoyl peroxide, lauroyl peroxide, 3,5,5-trimethylhexanoyl peroxide, succinic acid peroxide, benzoyl peroxide, 2,4-dichlorobenzoyl peroxide, and m-toluoyl peroxide; peroxydicarbonates such as diisopropyl peroxydicarbonate, di-2-ethylhexyl peroxydicarbonate, di-n-propyl peroxydicarbonate, bis-(4-t-butylcyclohexyl) peroxydicarbonate, dimyristyl peroxydicarbonate, di-2-ethoxyethyl peroxydicarbonate, dimethoxyisopropyl peroxydicarbonate, di(3-methyl-3-methoxybutyl)peroxydicarbonate, and diallyl peroxydicarbonate; peroxyesters such as t-butylperoxyacetate, t-butylperoxyisobutyrate, t-butylperoxypivalate, t-butylperoxyneodecanoate, cumylperoxyneodecanoate, t-butylperoxy-2-ethylhexanoate, t-butylperoxy-3,5,5-trimethylhexanoate, t-butylperoxylaurate, t-butylperoxybenzoate, di-t-butylperoxyisophthalate, 2,5-dimethyl-2,5-di(benzoylperoxy)hexane, t-butylperoxymaleic acid, t-butylperoxyisopropyl carbonate, cumylperoxyoctate, t-hexylperoxyneodecanoate, t-hexylperoxypivalate, t-butylperoxyneohexanoate, t-hexylperoxyneohexanoate, and cumylperoxyneohexanoate; and acetylcyclohexylsulfonyl peroxide and t-butylperoxyallyl carbonate, but are not limited to these.

Anaerobic curability can be imparted by adding an anaerobic curable catalyst such as saccharin as represented by the following Formula 1 to the (meth)acryloyl group. In an anaerobic state in which the reactants are not in contact with oxygen, the metal ions of the adherend react with the saccharin to decompose the organic peroxide and generate free radicals.

[Chem. 1]

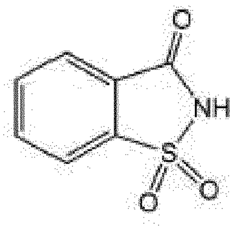

(Formula 1)

Room temperature curability can be imparted when the organic peroxide and a metal catalyst are used together for the (meth)acryloyl group, and the organic peroxide and the metal catalyst can be reacted at room temperature after being mixed when these are prepared into a two-component type. Examples of the metal catalyst include a copper compound and/or a vanadium compound, and the like. A copper compound and/or a vanadium compound are optimal since sufficient reactivity is not obtained by other metal compounds. Specific examples of the copper compound include copper chloride, copper acetate, copper naphthenate, copper acetylacetonate and the like, but are not limited to these. Specific examples of the vanadium compound include vanadyl acetylacetonate, vanadium stearate, vanadium naphthate,

vanadium pentoxide and the like, but are not limited to these.

Examples of a compound which promotes room temperature curability when the organic peroxide and the metal catalyst are used together for the (meth)acryloyl group include tertiary amines such as N,N-dimethylaniline, N,N-dimethyl-p-toluidine, diisopropanol-p-toluidine and triethylamine; polyamines such as diethylenetriamine, triethylenetetramine, and pentaethylenehexamine; thioureas such as thiourea, ethylenethiourea, benzoylthiourea, acetylthiourea, and tetramethyl thiourea; and the like, but are not limited to these.

The curable composition can include the compound having an allyl group or a vinyl siloxane group as a main agent, a cross-linking agent having a hydrogen siloxane group, a catalyst, and an inhibitor. The main agent and the cross-linking agent are subjected to an addition reaction (hydrosilation or hydrosilylation) by heat and can be polymerized and cured. Thermosetting property can be imparted to a one-component type containing all the components, and room temperature curability can also be imparted by preparing a two-component type in which these components are divided into two. Here, the inhibitor is a compound which suppresses the activity of catalyst. Since a composition containing only a main agent, a cross-linking agent, and a catalyst cannot maintain the storage stability, the storage stability is secured by adding an inhibitor to decrease the activity of catalyst. When the workability is taken into consideration, the curing temperature is preferably 80 to 160°C, preferably 100 to 150°C and the curing time is preferably 3 to 90 minutes.

The compound having an allyl group or a vinyl siloxane group is an oligomer having one or more functional groups in one molecule. Examples of the skeleton of the main agent include a dimethylsiloxane skeleton, a polyisobutylene skeleton, a polyisoprene skeleton, a polybutadiene skeleton, hydrogenated types of those having a carbon-carbon double bond among these skeletons, and the like. Hydrogenation is also called hydrogen addition, is a reduction reaction to add hydrogen atoms to a compound using hydrogen gas as a reducing agent, and converts unsaturated bonds present in the molecule into saturated bonds. Moreover, in the electrical and electronic field, a compound in which the main skeleton which does not contain polydimethylsiloxane is formed of a polymer of a (meth)acrylic monomer and at least two (meth)acryloyl groups are contained in the molecule is preferable, and a polybutadiene skeleton and a hydrogenated polybutadiene skeleton which exhibit favorable moisture permeability and gas permeability are preferable. Specific examples of the main agent contained in the compound having a main skeleton formed of a polymer of a (meth)acrylic monomer and at least two (meth)acryloyl groups in the molecule include EPION (registered trademark) series (A type) manufactured by KANEKA CORPORATION, or the like, but are not limited to these.

The cross-linking agent is a compound having one or more hydrogen siloxane groups in one molecule, may be any compound having a hydrogen siloxane group, and may be a modified compound. Those exhibiting compatibility with the main agent are particularly preferable. Specific examples of the cross-linking agent contained in the compound having a main skeleton formed of a polymer of a (meth)acrylic monomer and at least two (meth)acryloyl groups in the molecule include CR-300, CR-500 and the like that are KANEKA EPION (registered trademark) CR series manufactured by KANEKA CORPORATION, HMS-013, HMS-151, HMS-301 and the like that are hydrosiloxanes manufactured by AZmax. co, SH1107 Fluid and the like manufactured by Dow, and the like but are not limited to these.

Specific examples of the catalyst for addition reaction are not limited as long as they are metal catalysts used for the addition reaction of a compound having an allyl group or a vinyl siloxane group and a compound having hydrogen added to silicon. Particularly preferable catalysts are platinum-based and/or rhodium-based catalysts because of the price and a large number of kinds. Specific examples include platinum-divinyltetramethyldisiloxane complex, platinum-tetravinyltetramethyltetracyclosiloxane complex as a zero-valent platinum complex, platinum-dichlorobistriphenylphosphine complex as a divalent platinum complex, and chloroplatinic acid as a tetravalent platinum complex, but are not limited to these. Specific examples of the rhodium-based catalyst include chlorotris(triphenylphosphine)rhodium complex as a monovalent rhodium complex, tetrakis(acetato)dirhodium complex as a divalent rhodium complex, and tris(acetylacetonato)rhodium complex as a trivalent rhodium complex, but are not limited to these. In addition, two or more kinds of catalysts may be used in mixture.

Specific examples of the inhibitor include 1-ethynyl-1-cyclohexanol, 2-methyl-3-butin-2-ol, 3,5-dimethyl-1-hexin-3-ol, 3-methyl-1-dodecin-3-ol and the like as acetylene-based alcohols. Examples of the polymethylvinylcyclosiloxane include 1,3,5,7-tetravinyltetramethyltetracyclosiloxane, divinyltetramethyldisiloxane, tetravinyldimethyldisiloxane, trialkylcyanurate and the like. Other examples thereof include diallyl maleate, dimethyl maleate, diethyl maleate, diallyl fumarate, diethyl fumarate and the like, but are not limited to these.

A vinyl ether compound may be used together with the compound having an allyl group or a vinyl siloxane group, and example thereof include ethylene glycol divinyl ether, 1,3-propanediol divinyl ether, propylene glycol divinyl ether, 1,4-butanediol divinyl ether, 1,3-butanediol divinyl ether, 1,2-butanediol divinyl ether, 2,3-butanediol divinyl ether, 1-methyl-1,3-propanediol divinyl ether, 2-methyl-1,3-propanediol divinyl ether, 2-methyl-1,2-propanediol divinyl ether, 1,5-pentanediol divinyl ether, 1,6-hexanediol divinyl ether, cyclohexane-1,4-diol divinyl ether, cyclohexane-1,4-dimethanol divinyl ether, p-xylene glycol divinyl ether, diethylene glycol divinyl ether, triethylene glycol divinyl ether, tetraethylene glycol divinyl ether, polyethylene glycol divinyl ether, dipropylene glycol divinyl ether, tripropylene glycol divinyl ether, tetrapropylene glycol divinyl ether, polypropylene glycol divinyl ether, ethylene glycol propylene glycol copolymer divinyl ether and the like, but are not limited to these.

(Resin having cyclic ether group (including oligomer and the like and also referred to as compound having cyclic ether group))

The cyclic ether group contained in the resin (compound) having a cyclic ether group is preferably a 3-membered ring or a 4-membered ring, examples of the 3-membered ring include an epoxide group (glycidyl group), an alicyclic epoxy group (cycloalkene oxide) and the like, and examples of the 4-membered ring include an oxetane group and the like, but the 3-membered ring and 4-membered ring are not limited to these. Specific examples of the resin (compound) having a cyclic ether group include an epoxy resin, an alicyclic epoxy resin, an oxetane resin and the like, but are not limited to these, and two or more kinds of these may be combined. In addition, a cyclic thioether group (thiirane group) can also be used.

As the epoxy resin, a compound having two or more epoxy groups in one molecule is preferably contained. Only one kind may be used, or two or more kinds may be used in mixture. Specific examples of the epoxy resin are those obtained by condensing epichlorohydrin with polyhydric phenols such as bisphenols or a polyhydric alcohols, and for example, glycidyl ether type epoxy resins such as bisphenol A type, brominated bisphenol A type, hydrogenated bisphenol A type, bisphenol F type, bisphenol S type, bisphenol AF type, biphenyl type, naphthalene type, fluorene type, novolak type, phenol novolak type, orthocresol novolak type, tris(hydroxyphenyl) methane type, and tetraphenylol ethane type can be exemplified. Other examples thereof include glycidyl ester type epoxy resins obtained by condensation of epichlorohydrin with carboxylic acids such as phthalic acid derivatives and fatty acids, glycidylamine type epoxy resins obtained by the reaction of epichlorohydrin with amines, cyanuric acids, or hydantoins, and further epoxy resins modified by various methods, but are not limited to these. Commercially available bisphenol type epoxy resins include 827, 828EL, YL983U and the like as jER (registered trademark) series manufactured by Mitsubishi Chemical Corporation, and 830, EXA-835LV and the like as EPICLON (registered trademark) series manufactured by DIC Corporation. Other examples thereof include YD-128, YDF-170 and the like as Epototo series manufactured by NIPPON STEEL CORPORATION, but are not limited to these.

A compound having three or more epoxy groups and an aromatic ring in one molecule is preferably contained in the epoxy resin. Specific examples of the aromatic ring include a benzene ring, a naphthalene ring, an aniline ring and the like. Specific examples of the trifunctional compound include N,N-bis(2,3-epoxypropyl)-4-(2,3-epoxypropoxy)aniline, N,N-bis(2,3-epoxypropyl)-4-(2,3-epoxypropoxy)-2-methylaniline and the like. Moreover, specific examples of the tetrafunctional compound include diaminodiphenylmethane tetraglycidyl ether. Examples of commercially available products of the compounds include jER (registered trademark) 630 and jER (registered trademark) 604 manufactured by Mitsubishi Chemical Corporation and COMPOCERAN (registered trademark) E201, E202 and the like manufactured by Arakawa Chemical Industries, Ltd., but are not limited to these. Tg can be increased by adding the compound having three or more epoxy groups and an aromatic ring in one molecule.

The curable composition for mechanical foaming of the present invention may contain a compound having one epoxy group in one molecule, this compound is also generally called a reactive diluent, and specific examples thereof include phenylglycidyl ether, cresylglycidyl ether, p-t-butylphenylglycidyl ether, 2-ethylhexyl glycidyl ether, butyl glycidyl ether, glycidyl ether of alcohol having 12 to 14 carbon atoms (C12 to C14), butane diglycidyl ether, hexane diglycidyl ether, cyclohexanedimethyldiglycidyl ether, polyethylene glycol or polypropylene glycol-based glycidyl ether, or the like, but are not limited to these. The reactive diluent is preferable from the viewpoint of decreasing the viscosity and of the appearance.

The compound having an alicyclic epoxy group is mainly an epoxy compound having an epoxycyclohexyl group. Specific examples thereof include 3,4-epoxycyclohexylmethyl-3,4-epoxycyclohexanecarboxylate, bis(3,4-epoxycyclohexylmethyl)adipate, 2-(3,4-epoxycyclohexyl-5,5-spiro-3,4-epoxy)cyclohexanone-m-dioxane, bis(2,3-epoxycyclopentyl)ether and the like, but are not limited to these.

Specific examples of the compound having an oxetane group include monofunctional oxetane compounds such as 3-(meth)allyloxymethyl-3-ethyloxetane, isobornyloxyethyl(3-ethyl-3-oxetanylmethyl)ether, isobornyl (3-ethyl-3-oxetanylmethyl) ether, 2-ethylhexyl (3-ethyl-3-oxetanylmethyl) ether, and dicyclopentadiene (3-ethyl-3-oxetanylmethyl) ether, bifunctional oxetane compounds such as 3,7-bis(3-oxetanyl)-5-oxa-nonane, 1,2-bis[(3-ethyl-3-oxetanylmethoxy)methyl] ethane, 1,2-bis[(3-ethyl-3-)oxetanylmethoxy)methyl]propane, dicyclopentenyl bis(3-ethyl-3-oxetanylmethyl) ether, 1,4-bis[(3-ethyl-3-oxetanylmethoxy)methyl]butane, and 1,6-bis[(3-ethyl-3-oxetanylmethoxy)methyl]hexane, and polyfunctional oxetane compounds such as trimethylolpropane tris(3-ethyl-3-oxetanylmethyl) ether, pentaerythritol tris(3-ethyl-3-oxetanylmethyl) ether, pentaerythritol tetrakis(3-ethyl-3-oxetanylmethyl) ether, and dipentaerythritol hexakis(3-ethyl-3-oxetanylmethyl) ether, but are not limited to these.

Specific examples of the compound having a thiirane group include 2,2-bis(4-(2,3-epithiopropoxy)phenyl)propane, bis(4-(2,3-epithiopropoxy)phenyl)methane, 1,6-di(2,3-epithiopropoxy)naphthalene, 1,1,1-tris-(4-(2,3-epithiopropoxy)phenyl)ethane, 2,2-bis(4-(2,3-epithiopropoxy)cyclohexyl)propane, bis(4-(2,3-epithiopropoxy)cyclohexyl)methane, 1,1,1-tris-(4-(2,3-epithiopropoxy)cyclohexyl)ethane, (2,3-epithiocyclohexyl) ether of 1,5-pentanediol, di(3,4-epithiooctyl) ether of 1,6-hexanediol, and the like, but are not limited to these.

A curing agent and/or a curing accelerator (particularly a latent curing agent) can be added in order to impart thermosetting property or room temperature curability to the resin (compound) having a cyclic ether group. Examples of the curing agent include a polyamine compound, a polyphenol compound, a polythiol compound, an acid anhydride and the like, and examples of the curing accelerator include mainly a tertiary amine compound and the like.

Specific examples of the polyamine compound include dicyandiamide, dihydrazine, diethylenetriamine, triethylenetetramine, m-xylylenediamine, isophoronediamine, 1,3-bisaminomethylcyclohexane, diaminodiphenylmethane, metaphenylenediamine, diaminodiphenylsulfone, dicyandiamide, organic acid dihydrazide, piperidine and the like, but are not limited to these.

Specific example of the polyphenol compound include novolak type phenol resins obtained by reacting phenols such as phenol and alkylphenols with aldehydes such as formaldehyde and paraformaldehyde, and polyhydric phenol resins such as zilog-type phenol resins that are modified phenol novolak resins of these, dicyclopentadiene type phenol resins, and polyfunctional phenol resins, and the like, but are not limited. In particular, polyphenol compounds that are liquid at room temperature are preferable.

Specific examples of the polythiol compound include 3-methoxybutyl 3-mercaptopropionate, 2-ethylhexyl 3-mercaptopropionate, tridecylic 3-mercaptopropionate, trimethylolpropane tristhiopropionate, pentaeristol tetrakisthiopropionate, methylthioglycolate, 2-ethylhexylthioglycolate, ethylene glycol bisthioglycolate, 1,4-butanediol bisthioglycolate, trimethylolpropane tristhioglycolate, pentaeristol tetrakisthioglycolate, di(2-mercaptoethyl) ether, 1-butanethiol, 1-hexanethiol, cyclohexyl mercaptan, 1,4-butanedithiol, 3-mercapto2-butanol, γ-mercaptopropyltrimethoxysilane, benzenethiol, benzyl mercaptan, 1,3,5-trimercaptomethylbenzene, 1,3,5-trimercaptomethyl-2,4,6-trimethylbenzene, terminal thiol group-containing polyether, terminal thiol group-containing polythioether, a thiol compound obtained by reacting an epoxy compound with hydrogen sulfide, a thiol compound having a terminal thiol group, which is obtained by reacting a polythiol compound with an epoxy compound, and the like, but are not limited to these.

As specific examples of the acid anhydride, cyclic acid anhydrides such as dodecenyl succinic anhydride, polyazelineic anhydride, hexahydrophthalic anhydride, tetrahydrophthalic anhydride, methyltetrahydrophthalic anhydride, methylnadic anhydride, trimellitic anhydride, pyromellitic anhydride, benzophenone tetracarboxylic acid anhydride, tetrabromophthalic anhydride, and het anhydride are preferable, but are not limited to these. In addition, polymer-type acid anhydrides having two or more acid anhydride skeletons in one molecule, specifically, LIR403 and LIR-410 manufactured by KURARAY CO., LTD., VEMA manufactured by Daicel Corporation, and the like can also be used.

In order to promote the reactivity of the curing agent, a tertiary amine compound and the like are also used as a curing accelerator (latent curing agent) in some cases. The curing accelerator is generally solid at room temperature, and fine powders obtained by pulverizing a solid compound having an imidazole skeleton and an epoxy adduct-based compound which is obtained by adding a tertiary amine to an epoxy resin and then stopping the reaction in the middle are used, for example. Commercially available epoxy adduct-based compounds include AMICURE (registered trademark) series manufactured by Ajinomoto Fine-Techno Co., Inc., FUJICURE (registered trademark) series manufactured by T&K TOKA Corporation, NOVACURE (registered trademark) series manufactured by Asahi Kasei Chemicals Corporation, and the like. In addition, organic phosphorus-based compounds, organic amine-based compounds, imidazole derivative-based compounds and the like are known as curing accelerators that are liquid at room temperature. Moreover, a curing accelerator can also be used as a curing agent in some cases.

A photoacid generator can be used in order to impart photocurability to the resin (compound) having a cyclic ether group. The photoacid generator may be any compound that generates an acid by being irradiated with energy rays. Specific examples of the photoacid generator include salts in which the cation species are iodonium-based cation species, sulfonium-based cation species, or the like and the anion species are phosphorus-based anion species, boron-based anion species, or the like, and one kind or a combination of two or more kinds can be used. In addition, a nonionic photoacid initiator can also be used. In addition, examples of the photoacid generator other than salts include a diazomethane derivative, a triazine derivative, an imidylsulfonate derivative and the like, but are not limited to these. Specific examples thereof include haloalkyltriazinylaryls such as 1-methoxy-4-(3,5-di(trichloromethyl)triazinyl)benzene and 1-methoxy-4-(3,5-di(trichloromethyl)triazinyl)naphthalene, 1-methoxy-4-[2-(3,5-ditrichloromethyltriazinyl)ethenyl]benzene, 1,2-dimethoxy-4-[2-(3,5-ditrichloromethyltriazinyl)ethenyl]benzene, 1-methoxy-2-[2-(3,5-ditrichloromethyltriazinyl)ethenyl]benzene, succinimidyl camphorsulfonate, succinimidylphenyl sulfonate, succinimidyl toluyl sulfonate, succinimidyl trifluoromethyl sulfonate, phthalimidyl trifluoro sulfonate, naphthalimidyl camphorsulfonate, naphthalimidylmethane sulfonate, naphthalimidyltrifluoromethanesulfonate, naphthalimidyl toluyl sulfonate, and norbornene imidyltrifluoromethane sulfonate, but are not limited to these.

(Resin having isocyanate group (including oligomer and the like and also referred to as compound having isocyanate group))

In addition to the compound having a vinyl group and the compound having a cyclic ether group, a compound having an isocyanate group can be used, and it is preferable to add an amine compound to the compound having an

isocyanate group in order to impart thermosetting property.

As one-component polyurethane-based curable compositions for mechanical foaming, there are ones that contain a urethane prepolymer having a terminally active isocyanate group (NCO group) as a component and ones that contain a blocked urethane prepolymer and/or a blocked polyisocyanate compound which are tentatively blocked as a component in order to inactivate the active isocyanate groups of the urethane prepolymer and/or polyisocyanate compound. Furthermore, the one-component polyurethane-based curable compositions for mechanical foaming can also be prepared as a heat curing type (a thermosetting type) in which these urethane prepolymers as a main component are combined with a latent curing agent that is activated by being heated; and a heat curing type (a thermosetting type) in which a common curing agent and/or a heat-activated latent curing agent are combined with a blocked polyisocyanate compound.

The active isocyanate group-containing urethane prepolymer to be used in the one-component polyurethane-based curable composition for mechanical foaming having a configuration as described above is obtained by reacting an excessive amount of a polyisocyanate compound with a polyol.

Examples of the polyisocyanate compound include those belonging to aromatic, aliphatic, or alicyclic series, for example, tolylene diisocyanate (TDI), diphenylmethane diisocyanate, 3,3'-dimethyl-4,4'-biphenylene diisocyanate, 1,4-phenylene diisocyanate, xylylene diisocyanate, tetramethylxylylene diisocyanate, naphthylene diisocyanate, dicyclohexylmethane-4,4'-diisocyanate, crude TDI, polymethylene/polyphenylisocyanate, isophorone diisocyanate, hexamethylene diisocyanate, hydrogenated xylylene diisocyanate; isocyanurate compounds, carbodiimide compounds, and biuret compounds of these; and the like, and one kind of these or a mixture of two or more kinds of these can be used.

Examples of the polyol component include polyether polyols obtained by addition polymerization of ethylene oxide, propylene oxide, or alkylene oxides such as ethylene oxide and propylene oxide to polyhydric alcohols such as ethylene glycol, propylene glycol, glycerin, trimethylolpropane, pentaerythritol, sorbitol, and sucrose; ethylene glycol, propylene glycol, and oligoglycols of these; polyols of butylene glycol, hexylene glycol, and polytetramethylene ether glycol; polyester polyols such as polycaprolactone polyol and polyethylene adipate; polyolefin polyols such as polybutadiene polyol and polyisoprene polyol; higher fatty acid esters having hydroxyl groups such as castor oil; acrylic polyol; polysiloxane polyols having hydroxyl groups; a polymer polyol obtained by subjecting a vinyl monomer to the grafting reaction with polyether polyol or polyesters; and the like.

In addition, the terminal active isocyanate group-containing urethane prepolymer is obtained by conducting the reaction so that the NCO groups of the polyisocyanate compound are 1.1 to 3.5 times the OH groups of the polyol component as an equivalent ratio. The reaction is conducted at normal temperature or by heating the reaction system to 60 to 100°C for 1 to 24 hours in the presence of catalysts (specifically, organotin-based catalysts such as dibutyltin dilaurate, bismuth-based catalysts such as bismuth octylate, tertiary amine-based catalysts, and the like). By this, a urethane prepolymer having a terminal active isocyanate group at 0.5 to 10% by mass and a viscosity of 3 to 50 Pa·s/20°C can be obtained.

Incidentally, the one-component polyurethane-based curable composition for mechanical foaming is obtained by adding an inactivated solid polyamine-based latent curing agent to each of a polyisocyanate compound and a terminally active isocyanate group-containing urethane polymer obtained by reacting a polyol component with an excessive amount of a polyisocyanate compound or a mixture of these. Examples of the solid polyamine-based latent curing agent include a fine powder-coated amine in which a fine powder having a central particle size of 2 μm is fixed on the surface of solid polyamine particles having a melting point of 50°C or more and a central particle size of about 20 μm to coat and inactivate the active amino group. Incidentally, the fine powder is fixed so that the mass ratio of the solid polyamine to the fine powder is 1/0.001 to 0.5 to coat and inactivate the active amino group on the surface.

In order to impart thermosetting property to the urethane prepolymer, a latent curing agent that is activated by being heated is used. As the latent curing agent, an inactivated solid polyamine is preferable. As the solid polyamine, for example, a fine powder-coated amine having a central particle size of about 8 μm is suitable which is obtained by mixing 76.9 parts by mass of 1,12-dodecanediamine (melting point: 71°C) having a central particle size of about 8 μm and 23.1 parts by mass of fine powder of titanium oxide having a central particle size of 0.02 μm and pulverizing the mixture using a jet mill.

Examples of the solid polyamine include aromatic or aliphatic polyamines that are solid at normal temperature and have a melting point of 50°C or more, specifically, aromatic solid polyamines such as 4,4'-diaminodiphenylmethane, 2,4'-diaminodiphenylmethane, 3,3'-diaminodiphenylmethane, 3,4'-diaminodiphenylmethane, 2,2'-diaminobiphenyl, 2,4'-diaminobiphenyl, 3,3'-diaminobiphenyl, 2,4-diaminophenol, 2,5-diaminophenol, o-phenylenediamine, m-phenylenediamine, 2,3-tolylenediamine, 2,4-tolylenediamine, 2,5-tolylenediamine, 2,6-tolylenediamine, and 3,4-tolylenediamine, and aliphatic solid polyamines such as 1,12-dodecanediamine, 2,10-decanediamine, 1,8-octanediamine, 1,14-tetradecanediamine, and 1,16-hexadecanediamine, and one kind of these or a mixture of two or more kinds of these is used. The solid polyamine is usually pulverized and adjusted to have a central particle size of 20 μm or less, preferably 3 to 15 μm.

As an example of the method for inactivating a solid polyamine as the latent curing agent, the amino group on

the particle surface of the solid polyamine is inactivated by being coated with an inactivating agent. As the inactivating agent, an organic or inorganic fine powder is used, and the organic or inorganic fine powder is fixed to the particle surface of the solid polyamine. Examples of the fine powder include inorganic titanium oxide, calcium carbonate, clay, silica, zirconia, carbon, alumina, talc and the like, and fine particle powders of organic polyvinyl chloride, polyacrylic resin, polystyrene, polyethylene and the like can also be used. The central particle size of the fine powder is 2 μm or less, preferably 1 μm or less. The inactivation treatment of the solid polyamine is to coat the particle surface of the solid polyamine with the above-mentioned fine powder. For the inactivation treatment, the mass ratio of solid polyamine powder/fine powder is set to about 1/0.001 to 0.5, the fine powder material is dispersed and mixed with the solid polyamine to fix the fine powder onto the surface of the solid polyamine while pulverizing the solid polyamine to a predetermined particle size.

The urethane prepolymer and inactivated solid polyamine-based latent curing agent which have been obtained as described above are used by being blended so that the amino group of the polyamine and the isocyanate group when being reactivated by heating have an equivalent ratio of 1/0.5 to 2.0.

The one-component polyurethane-based heat curing type (thermosetting type) curable composition for mechanical foaming obtained as described above is cured by heating. In particular, the composition has critical curing properties with respect to the heating temperature and is not cured at a temperature of less than 60°C, but the inactivated solid polyamine is reactivated and curing begins at 80°C or more, and the curing reaction is substantially completed in a significantly short time.

In the blocked urethane prepolymer and/or blocked polyisocyanate compound used in the one-component polyurethane-based heat curing type (thermosetting type) curable composition for mechanical foaming, an isocyanate group blocked so that the active NCO group of the urethane prepolymer and/or polyisocyanate compound is inactivated by being tentatively reacted with a blocking agent can also be used. Examples of the blocking agent include phenols (phenol, cresol, xylenol, ethylphenol, and the like), lactams (ε-caprolactam, δ-valerolactam, β-butyrolactam, β-propiolactam, and the like), oximes (formamidooxime, acetamide oxime, acetoxime, methylethylketooxime, diacetylmonooxime, benzophenone oxime, cyclohexanone oxime, and the like), active methylenes (diethyl malonate, dimethyl malonate, ethyl acetoacetate, methyl acetoacetate, acetylacetone, and the like), alcohols (methanol, ethanol, propanol, isopropanol, butanol, 2-ethylhexanol, ethylene glycol monomethyl ether, ethylene glycol monoethyl ether, ethylene glycol monobutyl ether, and the like), benzotriazole, mercaptans, acid amides, imides, amines, imidazoles, ureas, and the like. In particular, phenols, lactams, and oximes are desirable. The block reaction is conducted by heating the reaction system to 50 to 110°C in the presence of a catalyst at a proportion at which the active hydrogen group of the blocking agent is 0.9 to 1.1 times equivalent relative to the NCO group of the urethane prepolymer or polyisocyanate compound to obtain a blocked urethane prepolymer or a blocked polyisocyanate compound in which active NCO groups are blocked.

Furthermore, as a one-component curable composition for mechanical foaming, there is a hot melt type that solidifies when being cooled to room temperature from a state of being heated and melted, and examples of such a composition include those containing a thermoplastic resin. Examples of the thermoplastic resin include polyolefin copolymers such as polyethylene, polypropylene, ethylene propylene copolymer, ethylene vinyl acetate copolymer, and SEBS, polystyrene, polyester resin, acrylic resin, polyvinyl chloride, polyvinylidene chloride, fluororesin, polycarbonate, polyacetal, polyamide, polybutadiene, copolymers of these, and the like. A one-component curable composition for mechanical foaming can be prepared by imparting a hydroxyl group, a carboxyl group, a glycidyl group, an amino group, a mercapto group, an isocyanate group, an alkoxysilyl group, or the like as a crosslinkable functional group to the above thermoplastic resins and combining a compound having a functional group that reacts with the above crosslinkable functional group with this.

Appropriate amounts of various additives such as adhesive auxiliaries such as silane coupling agents, fillers, tackifiers, rubber/thermoplastic elastomers, rubber-like polymer fine particles, storage stabilizers such as BHT, antioxidants, light stabilizers, plasticizers, dyes, pigments, flame retardants, sensitizers, organic solvents, heavy metal deactivators, ion trapping agents, emulsifiers, water dispersion stabilizers, mold release agents, leveling agents, waxes, rheology control agents, and surfactants other than a foam stabilizer may be blended as optional components into the curable composition for mechanical foaming of the present invention as long as the object of the invention is not impaired.

Examples of rubber/thermoplastic elastomers include rubber, elastomer, and natural rubber, polyisoprene rubber, polyisobutylene rubber, polybutadiene rubber, butyl rubber, nitrile butyl rubber, polychloroprene rubber, styrene butadiene rubber, styrene isoprene rubber, acrylic rubber, polybutylene, polybutene, polyphenylene oxide, polycarbonate, polyvinyl acetate, methacrylic resin, polyacrylonitrile, thermoplastic polyester, polyamide, polyvinyl butyral, epoxy resin, and ethylene vinyl acetate copolymer as other polymers, and the like. These are used by being dissolved in a monomer or an oligomer or uniformly dispersed.

Examples of the filler include glass, silica, alumina, talc, mica, silicone rubber powder, calcium carbonate, aluminum nitride, carbon powder, kaolin clay, dried clay minerals, dried diatomaceous earth and the like. The average particle size of filler is preferably 0.001 to 100 μm, still more preferably the average particle size is 0.01 to 50 μm, and particularly preferably the average particle size is 0.1 to 20 μm. Incidentally, the method for measuring the average

particle size is a laser diffraction method. Incidentally, the blending amount of filler is not particularly limited but is preferably 0.1 to 300 parts by mass, still more preferably 1 to 200 parts by mass, particularly preferably 5 to 100 parts by mass in 100 parts by mass of the resin having a vinyl group.

The silica-based filler is blended for the purpose of improving the mechanical strength of the cured product. Preferably, those hydrophobized with dimethyldichlorosilane, hexamethylsilazane, silicone oil, aminosilane, alkylsilane having 1 to 12 carbon atoms (C1 to C12), a silane having a (meth)acryloyl group and the like, and the like are used. Examples of commercially available silica products include Aerosil (registered trademark) R974, R972, R9200, R976, R976S, RX50, NAX50, NX90, RX200, R8200, RX300, R812, R812S, RY50, NY50, RY200S, R202, RY200, RY300, R104, R106, RA200H, RA200HS, R805, R816, RM50, R711, and R7200 (manufactured by NIPPON AEROSOL CO., LTD.).

Among the optional components, the addition of an antioxidant and a light stabilizer is preferable for improvement in weather resistance of the curable composition for mechanical foaming. Commercially available products can be used as the antioxidant and the light stabilizer. Examples thereof include Sumilizer (registered trademark, the same applies hereinafter) BHT, Sumilizer S, Sumilizer BP-76, Sumilizer MDP-S, Sumilizer GM, Sumilizer BBM-S, Sumilizer WX-R, Sumilizer NW, Sumilizer BP-179, Sumilizer BP-101, Sumilizer GA-80, Sumilizer TNP, Sumilizer TPP-R, and Sumilizer P-16 (manufactured by Sumitomo Chemical Co., Ltd.), ADEKA STAB (registered trademark, the same applies hereinafter) AO-20, ADEKA STAB AO-30, ADEKA STAB AO-40, ADEKA STAB AO-50, ADEKA STAB AO-60, ADEKA STAB AO-70, ADEKA STAB AO-80, ADEKA STAB AO-330, ADEKA STAB PEP-4C, ADEKA STAB PEP-8, ADEKA STAB PEP-24G, ADEKA STAB PEP-36, ADEKA STAB HP-10, ADEKA STAB 2112, ADEKA STAB 260, ADEKA STAB 522A, ADEKA STAB 329K, ADEKA STAB 1500, ADEKA STAB C, ADEKA STAB 135A, and ADEKA STAB 3010 (manufactured by ADEKA CORPORATION), CHINUBIN (registered trademark, the same applies hereinafter) 770, CHINUBIN 765, CHINUBIN 144, CHINUBIN 622, CHINUBIN 111, CHINUBIN 123, and CHINUBIN 292 (manufactured by BASF SE), and the like. The blending amount of these antioxidants and light stabilizers is not particularly limited but is preferably 0.001 to 10 parts by mass, more preferably 0.01 to 5 parts by mass relative to 100 parts by mass of the resin having a vinyl group.

The apparatus for curing the curable composition for mechanical foaming in a heating atmosphere is not particularly limited, and examples thereof include a hot air drying furnace, an infrared (IR) furnace, and the like, but are not limited to these. The curable composition for mechanical foaming can be cured in an atmosphere of 20 to 200°C as a curing temperature for 1 to 300 minutes as a curing time.

The light source used to cure the curable composition for mechanical foaming by irradiation is not particularly limited, and examples thereof include a low pressure mercury lamp, a medium pressure mercury lamp, a high pressure mercury lamp, an ultra high pressure mercury lamp, a black light lamp, a microwave excited mercury lamp, a metal halide lamp, a sodium lamp, a halogen lamp, a xenon lamp, LED, a fluorescent lamp, sunlight, an electron beam irradiation device, and the like. The light irradiation amount is preferably 10 $kJ/m^2$ or more, more preferably 15 $kJ/m^2$ or more from the viewpoint of the properties of the cured product.

Examples of the applications in which a foam formed using the curable composition for mechanical foaming is preferably used include potting materials, vibration/impact absorbers, cushioning materials, sponges, water-retaining materials, cushions, elastic materials, packing materials, heat insulating materials, sound absorbing materials, building materials, weight-reducing materials, adhesives, coating materials, lining materials, sealing materials and the like.

It is preferable that the curable composition for mechanical foaming of the present invention does not contain the foam stabilizer (foaming regulator) used in WO 2004/060628 A. When a foam stabilizer (foaming regulator) is added as an additive, the foam stabilizer causes outgas and the application of the composition is limited in the electrical and electronic field. However, in a case in which a foam stabilizer (foaming regulator) is not contained, it is excellent in that the generation of outgas can be effectively prevented in the manufacturing process of the foam to be used in a wide range of technical fields including the electrical and electronic field.

The mechanical foaming apparatus for performing mechanical foaming using the curable composition for mechanical foaming of the present invention will be described in detail in the method for manufacturing a foam according to the present invention to be described below.

<Method for manufacturing foam>

The method for manufacturing a foam of the present invention is a method for manufacturing a foam using a mechanical foaming apparatus that produces a foamable material in which a gas is mixed in a liquid and discharges and foams the foamable material, in which

the mechanical foaming apparatus includes a flow channel that delivers the liquid and the gas,
a liquid supply section that supplies the liquid to the flow channel, a gas supply unit that supplies the gas to the flow channel, an on-off valve that can switch a communication state between the flow channel and the gas supply unit,

a first gear pump disposed in the middle of the flow channel, a second gear pump that is disposed on a downstream side of the flow channel with respect to the first gear pump and mixes the gas into the flow channel and generates a suction pressure for producing the foamable material by being rotationally driven at a speed higher than the first gear pump, a first pressure sensor that detects a pressure between pumps in the flow channel between the first gear pump and the second gear pump, a discharge unit including a nozzle having a discharge port that discharges the foamable material in which the gas is mixed in the liquid and a discharge valve main body portion having a communication channel that delivers the foamable material delivered from the second gear pump to the nozzle, and a control unit that controls the respective sections of the apparatus to perform discharge operation of driving the first gear pump, the second gear pump, and the gas supply unit and opening the on-off valve to discharge the foamable material from the discharge unit and standby operation of stopping work of the first gear pump, the second gear pump, and the gas supply unit and closing the on-off valve to interrupt discharge of the foamable material, the control unit rotationally drives the second gear pump when the pressure between pumps reaches a preset upper limit pressure during the standby operation and delivers at least a part of the foamable material in the flow channel between the first gear pump and the second gear pump to a downstream side of the second gear pump to decrease a pressure in the flow channel to a pressure lower than the upper limit pressure, and
the liquid is the curable composition for mechanical foaming of the present invention.

According to the method for manufacturing a foam of the present invention, it is possible to manufacture an optimum foam in which bubbles are evenly dispersed, bubbles do not rise to the liquid surface, the foamed state is favorable, and the foamed state from the appearance is also even when mechanical foaming is performed using a mechanical foaming apparatus.

In more detail, the method for manufacturing a foam (a foamed material) of the present invention is a mechanical foaming method in which a foamable material in which a gas is mixed in a curable composition for mechanical foaming which has a complex viscosity $\eta^*$ satisfying the conditions (A) and (B) and is provided as a liquid is produced and the foamable material is discharged and foamed. The mechanical foaming method is characterized in that between two gear pumps disposed in the flow channel that delivers the curable composition for mechanical foaming which has a complex viscosity $\eta^*$ satisfying the conditions (A) and (B) and the gas, the second gear pump disposed on the downstream side is rotationally driven at a speed higher than the first gear pump disposed on the upstream side, suction pressure is thus generated in the flow channel between the first gear pump and the second gear pump to mix the gas, the discharge operation of discharging the foamable material is performed, and then when the pressure in the flow channel between the first gear pump and the second gear pump exceeds the preset upper limit pressure in a state in which the discharge operation is stopped, the second gear pump is rotationally driven and at least a part of the foamable material in the flow channel is delivered to the downstream side of the second gear pump to decrease the pressure in the flow channel between the first gear pump and the second gear pump to a pressure lower than the upper limit pressure.

By having this configuration, the bubbles are evenly dispersed, the bubbles do not rise to the liquid surface, and a foam can be favorably formed at the time of mechanical foaming regardless of the kind and cured form of the curable resin in the curable composition for mechanical foaming which has a complex viscosity $\eta^*$ satisfying the conditions (A) and (B) of the present invention. Furthermore, by manufacturing a foam using the above-mentioned mechanical foaming apparatus and the curable composition for mechanical foaming of the present invention, it is possible to obtain an optimum cured product (foam) in which the bubbles are evenly dispersed, the foamed state is favorable, and the foamed state of appearance is also even.

Furthermore, the pressure between pumps is controlled so as not to be higher than the upper limit pressure. By setting the upper limit pressure to a pressure at which the curable composition for mechanical foaming (liquid resin) which has a complex viscosity $\eta^*$ satisfying the conditions (A) and (B) of the present invention and the foamable material do not flow back to the gas supply unit when the on-off valve is opened, it is possible to suppress back flow of the foamable material to the gas supply unit when the discharge operation is started. By this, the mixing ratio of the curable composition for mechanical foaming (liquid resin) of the present invention to the gas does not fluctuate in the gas-liquid mixing portion and a desired expansion ratio can be stably obtained.

Hereinafter, embodiments of the method for manufacturing a foam of the present invention will be described with reference to the attached drawings. Incidentally, the following description does not limit the technical scope and meaning of terms described in the claims. In addition, the dimensional ratios in the drawings are exaggerated for convenience of description and are different from the actual ratios in some cases.

(Foam)

A foam M that is obtained by the mechanical foaming method using a gear pump type mechanical foaming apparatus 10 according to the present embodiment and a curable composition for mechanical foaming (also referred to as liquid resin) M1 of the present invention that is provided to the apparatus as a liquid for foamable material is produced

by foaming a gas M2 by discharging a foamable material M0 in which the gas M2 is mixed in the liquid resin (corresponding to the liquid) M1 into the atmospheric air (see Fig. 1 for the signs).

Examples of the application item of the foam M include waterproofing of electronic parts and cylinder head covers and oil pans of motor vehicles, which are required to exhibit airtightness, sealing materials for dust protection, potting of panels inside the engine room of motor vehicles and electronic parts, which are required to exhibit cushioning property, soundproofing of housing cases, vibration-proofing, heat insulating materials, and the like.

Incidentally, in the present specification, a mixture in which the gas M2 is mixed in the liquid resin M1 that is the curable composition for mechanical foaming of the present invention is referred to as the foamable material M0, and a state in which the foamable material M0 is discharged from the mechanical foaming apparatus 10 into the atmospheric air and the gas M2 is foamed is referred to as the foam M. Moreover, the liquid resin M1 before being cured or solidified is also simply referred to as the resin M1.

The resin M1 may be the curable composition for mechanical foaming of the present invention. Example thereof include curable compositions for mechanical foaming of a heat curing type as described above, a light/radiation curing type of ultraviolet light, visible light, electron beam and the like, a sol-gel type, a vulcanization curing type, and the like. Moreover, the resin M1 may be a hot melt type curable composition for mechanical foaming, which is a thermoplastic resin and has a mechanism of melting by heating and solidifying by cooling at room temperature. For example, those that are cured, crosslinked, or solidified from a fluid state, such as silicone resin, modified silicone resin, acrylic resin, urethane acrylate resin, epoxy resin, polyurethane resin, polyester, polypropylene, polyethylene, polycarbonate, synthetic rubber, natural rubber, synthetic resin, natural resin elastomer, are included.

As the gas M2, for example, nitrogen gas, carbon dioxide gas, air and the like can be suitably used.

(Mechanical foaming apparatus)

Fig. 1 schematically illustrates the overall configuration of the mechanical foaming apparatus 10. The mechanical foaming apparatus 10 produces the foamable material M0 in which the gas M2 is mixed in the resin M1, and discharges and foam the foamable material M0 to produce the foam M.

To outline with reference to Fig. 1, the mechanical foaming apparatus 10 according to the present embodiment is equipped with a resin supply section (corresponding to a liquid supply section) 100 that supplies the resin M1, a pump section 200 that produces and delivers the foamable material M0 in which the gas M2 is mixed in the resin M1, and a head section 300 that stirs and discharges the foamable material M0 to produce the foam M. The respective sections of the apparatus are connected to each other by a pipe 12 constituting a flow channel 11 that delivers the resin M1 and the gas M2. Incidentally, in the present specification, the side on which the resin supply section 100 is disposed is referred to as the upstream side, and the side on which the head section 300 is disposed is referred to as the downstream side.

The pipe 12 is composed of a first pipe 12a that connects the resin supply section 100 and the pump section 200 to each other, a second pipe 12b disposed in the pump section 200, and a third pipe 12c that connects the pump section 200 and the head section 300 to each other. The material forming the pipe is not particularly limited as long as it is a material that is hardly deformed by the pressure in the flow channel 11, and for example, a metal such as SUS can be suitably used.

The mechanical foaming apparatus 10 is further equipped with a control unit 400. The control unit 400 controls the respective sections of the apparatus to perform discharge operation of discharging the foamable material M0 from the head section 300 and standby operation of interrupting discharge of the foamable material M0. The control unit 400 further performs the control of back flow suppression and the preliminary pressurization during the standby operation. Incidentally, the details of each control will be described later.

(Resin supply section)

As illustrated in Fig. 1, the resin supply section 100 is connected to the pump section 200 via the first pipe 12a. The resin supply section 100 is equipped with a resin tank 101 that stores the resin M1. The resin supply section 100 is composed of, for example, a replaceable cartridge and the like. The pressure of the resin supply section 100 is preferably 0.1 to 1.0 MPa when pressure resistance is taken into consideration.

(Pump section)

As illustrated in Fig. 1, the pump section 200 is equipped with a first gear pump 211 disposed on the downstream side of the resin supply section 100, a second gear pump 212 disposed on the downstream side of the first gear pump 211, and a gas supply unit 220 that is disposed between the first gear pump 211 and the second gear pump 212 and supplies the gas M2 to the second pipe 12b. The first gear pump 211 and the second gear pump 212 are connected to each other via the second pipe 12b.

The pump section 200 is further equipped with an on-off valve 230 that can switch the communication state between the second pipe 12b and the gas supply unit 220 and a switching valve 240 that can switch the communication state between the second gear pump 212 and the head section 300. In addition, the second pipe 12b is provided with a first pressure sensor 21 that detects a pressure between pumps P1, and it is preferable to install the first pressure sensor 21 in the vicinity of an intake port 13.

During the discharge operation, the on-off valve 230 and the switching valve 240 are opened as well as the first gear pump 211, the second gear pump 212, and the gas supply unit 220 are driven to deliver the foamable material M0 to the head section 300 as illustrated in Fig. 1.

The first gear pump 211 and the second gear pump 212 can be configured by a known gear pump that is equipped with gears and utilizes the space between the teeth of each gear to convey the fluid. The transfer amount of the gear pump is fixed and stable, and the transfer amount of the fluid can be relatively easily adjusted by adjusting the rotating speed of the gear. As the gear pump, for example, a circumscribed gear pump equipped with two gears that are rotationally driven at the same time by meshing teeth can be used.

During the discharge operation, the second gear pump 212 is rotationally driven at a speed higher than the first gear pump 211. The rotating speed of the first gear pump : the rotating speed of the second gear pump is preferably 1.0 : 1.1 to 1.0 : 3.0. The amount (volume) of the resin M1 flowing out from the second pipe 12b by the second gear pump 212 is larger than the amount of the resin M1 flowing into the second pipe 12b by the first gear pump 211. For this reason, a negative pressure is generated in the second pipe 12b according to the volume of the decreased amount of the resin M1.

The gas supply unit 220 pumps the gas M2 in a state of being pressurized to a predetermined pressure to the second pipe 12b. The pumping pressure of the gas M2 is preferably 0.02 to 0.6 MPa. The gas supply unit 220 is equipped with a gas tank 221 that stores the gas M2 and a gas supply port 222 provided so that the gas M2 can be delivered from the gas tank 221 to the second pipe 12b. The gas supply unit 220 supplies the gas M2 to the second pipe 12b by utilizing the negative pressure generated in the second pipe 12b during the discharge operation as the suction pressure (hereinafter, the negative pressure is referred to as suction pressure) for sucking the gas M2.

The second pipe 12b is equipped with the intake port 13 provided so that the gas M2 delivered from the gas supply unit 220 can flow into the flow channel 11. A part of the flow channel 11 of the second pipe 12b forms a gas-liquid mixing portion 11a in which the resin M1 and the gas M2 are mixed.

The on-off valve 230 is disposed between the gas supply port 222 equipped in the gas supply unit 220 and the second pipe 12b and is configured to be able to open and close the intake port 13.

The on-off valve 230 is configured by a known needle valve. The on-off valve 230 is equipped with a needle-shaped valve body 231 to which an urging force is applied in the valve closing direction in which the intake port 13 is closed, a piston 232 that is connected to the valve body 231 and moves the valve body 231 in the valve opening direction in which the intake port 13 is opened, and a tubular portion 233 forming an accommodation space 233a that accommodates the valve body 231 and the piston 232. The accommodation space 233a communicates the gas supply port 222 with the second pipe 12b via the intake port 13.

In the valve body 231, an urging force is applied from the side (upper side in Fig. 1) separating from the intake port 13 toward the side (lower side in Fig. 1) approaching the intake port 13 by an urging member 234. As illustrated in Fig. 2(A), the valve body 231 maintains a valve closed state in which the lower end side is seated on a valve seat 235 installed at the intake port 13 and the flow channel 11 between the second pipe 12b and the gas supply unit 220 is closed in a state in which the urging force is applied. The urging member 234 can be configured by, for example, a known elastic member such as a spring.

The urging member 234 is supported by a support member 236 installed on the upper side of the on-off valve 230. The end portion on the other end side of the urging member 234 is fixed to the piston 232 in a state in which one end side is fixed to the support member 236.

The lower end surface of the valve body 231 can be formed in a shape corresponding to the valve seat 235, for example, a tapered shape so that the sealing property when seated on the valve seat 235 is improved.

In the tubular portion 233, an air supply port 238 joined to an air pump 237 is provided and a passage 239 communicating with the air supply port 238 is formed. The piston 232 is driven by the air pressure supplied through the air supply port 238 in a direction (upward in Fig. 1) separating from the intake port 13 to resist the urging force of the urging member 234. By this, the valve body 231 connected to the piston 232 moves upward, and the valve opened state in which the flow channel 11 between the second pipe 12b and the gas supply unit 220 is opened is maintained as illustrated in Fig. 1.

The switching valve 240 is disposed in the third pipe 12c and is configured to be able to open and close the flow channel 11 between the second gear pump 212 and the head section 300.

Similarly to the on-off valve 230, the switching valve 240 is configured by a known needle valve, a known ball valve, and the like. The switching valve 240 is equipped with a valve body 241 to which an urging force is applied in the valve closing direction in which the flow channel 11 of the third pipe 12c is closed, a piston 242 that is connected to the

valve body 241 and moves the valve body 241 in the valve opening direction in which the flow channel 11 of the third pipe 12c is opened, and a tubular portion 243 forming an accommodation space 243a that accommodates the valve body 241 and the piston 242. The accommodation space 243a formed inside the tubular portion 243 communicates the second gear pump 212 with the head section 300 via the third pipe 12c.

In the valve body 241, an urging force is applied from the side (lower side in Fig. 1) separating from the second gear pump 212 toward the side (upper side in Fig. 1) approaching the second gear pump 212 by an urging member 244. As illustrated in Fig. 2(A), the valve body 241 maintains a valve closed state in which the upper end side is seated on a valve seat 245 installed at the flow channel 11 of the third pipe 12c and the flow channel 11 between the second gear pump 212 and the head section 300 is closed in a state in which the urging force is applied. The urging member 244 can be composed of a similar material to that of the urging member 234 equipped in the on-off valve 230.

The urging member 244 is supported by a support member 246 installed on the lower side of the switching valve 240. The end portion on the other end side of the urging member 244 is fixed to the piston 242 in a state in which one end side is fixed to the support member 246.

The upper end surface of the valve body 241 can be formed into, for example, a shape having a flat portion 241a having a shape corresponding to the passage portion of the valve seat 245 and a tapered portion 241b extending from the flat portion 241a so that the sealing property when seated on the valve seat 245 is improved as illustrated in Fig. 2(A).

In the tubular portion 243, an air supply port 248 joined to an air pump 247 is provided and a passage 249 communicating with the air supply port 248 is formed. The piston 242 is driven by the air pressure supplied through the air supply port 248 in a direction (downward in Fig. 1) separating from the second gear pump 212 to resist the urging force of the urging member 244. By this, the valve body 241 connected to the piston 242 moves downward, and the valve opened state in which the flow channel 11 between the second gear pump 212 and the head section 300 is opened is maintained.

(Head section)

The head section 300 is equipped with a mixer 310 that stirs the foamable material M0 delivered by the second gear pump 212 and a discharge unit 320 that discharges the foamable material M0 stirred by the mixer 310 as illustrated in Fig. 1.

The mixer 310 is disposed between the pump section 200 and the discharge unit 320. The mixer 310 is equipped with an inlet portion 311 through which the foamable material M0 from the flow channel 11 flows into the mixer, an outlet portion 312 through which the foamable material M0 is delivered to the discharge unit 320, a mixing chamber 313 that is disposed between the inlet portion 311 and the outlet portion 312 and forms a space in which the foamable material M0 is mixed, a rotor 314 that rotates in the mixing chamber 313 to stir the foamable material M0, and a motor 315 that rotationally drives the rotor 314. The number of revolutions of the rotor is preferably 1 to 600 rpm. In a case in which the mixer generates heat, a cooling device may be provided.

The inlet portion 311 is connected to the third pipe 12c. The outlet portion 312 is disposed so as to directly face the communication channel 322a of the discharge unit 320 to be described later.

The rotor 314 is configured by, for example, a rotor shaft 314a and a plurality of blades 314b. The plurality of blades 314b are attached at predetermined intervals in a direction substantially perpendicular to the axial direction of the rotor shaft 314a.

The rotor shaft 314a is connected to the rotating shaft (not illustrated) of the motor 315 and is integrated with the rotating shaft and rotationally driven around the shaft. As the rotor 314 rotates, the plurality of blades 314b rotate to stir the foamable material M0.

The motor 315 is formed so that one end portion is joined to the rotor 314 and the other end portion extends from the mixing chamber 313 to the outside. As the motor 315, a known electric motor can be used. It is preferable that the power source for driving the motor 315 is provided independently of the other respective units of the apparatus. By this, the mixer 310 can be driven during the standby operation, and thus the state in which the gas M2 in the foamable material M0 is dispersed can be maintained.

The discharge unit 320 is equipped with a nozzle 321 having a discharge port 321a through which the foamable material M0 is discharged, a discharge valve main body portion 322 having a communication channel 322a that delivers the foamable material M0 stirred by the mixer 310 to the nozzle 321, a first nozzle valve 331 that can open and close the discharge port 321a equipped in the nozzle 321, and a second nozzle valve 332 that can switch the communication state between the communication channel 322a equipped in the discharge valve main body portion 322 and the nozzle 321. The communication channel 322a is provided with a second pressure sensor 22 that detects the discharge pressure P2 of the foamable material M0 immediately before discharge.

The nozzle 321 is detachably provided to the discharge valve main body portion 322. The nozzle 321 has a substantially cylindrical shape with a tapered tip, and a discharge port 321a is formed at the tip.

The discharge valve main body portion 322 is equipped with an accommodation space 322b that accommodates the first nozzle valve 331 and the second nozzle valve 332. In the discharge valve main body portion 322, an air supply port 324 joined to an air pump 323 is provided and a passage 325 communicating with the air supply port 324 is formed.

Similarly to the on-off valve 230 and the switching valve 240, the first nozzle valve 331 and the second nozzle valve 332 are configured by a known needle valve.

The first nozzle valve 331 has a first valve body 331a, and the second nozzle valve 332 has a second valve body 332a. The first valve body 331a and the second valve body 332a are integrally formed. The first nozzle valve 331 and the second nozzle valve 332 are configured so that the valve opened state and the valve closed state of the first nozzle valve 331 and the second nozzle valve 332 can be each switched as the integrally formed first valve body 331a and second valve body 332a move.

The first valve body 331a is disposed on the side closer to the nozzle 321 than the second valve body 332a. The first valve body 331a is configured to be integrated with the second valve body 332a and movable in a direction (vertical direction in Fig. 1) approaching and separating from the discharge port 321a. The first nozzle valve 331 maintains a valve closed state in which the first valve body 331a moves in a direction (downward in Fig. 1) approaching the discharge port 321a by the urging force, that will be described later, applied to the second valve body 332a, the lower end side is seated on a first valve seat 331b installed at the discharge port 321a as illustrated in Fig. 4(B), and the discharge port 321a is closed.

The second nozzle valve 332 is equipped with the second valve body 332a to which the urging force is applied in the valve closing direction in which the discharge port 321a and the communication channel 322a of the discharge valve main body portion 322 are closed and a piston 332b that is connected to the second valve body 332a and moves the second valve body 332a in the valve opening direction in which the discharge port 321a and the communication channel 322a of the discharge valve main body portion 322 are opened.

In the second valve body 332a, an urging force is applied from the side (upper side in Fig. 1) separating from the communication channel 322a equipped in the discharge valve main body portion 322 toward the side (lower side in Fig. 1) approaching the communication channel 322a by an urging member 332c. As illustrated in Fig. 4(C), the second nozzle valve 332 maintains a valve closed state in which the lower end side is seated on a second valve seat 332d installed at the communication channel 322a and the communication channel 322a is closed in a state in which the urging force is applied to the second valve body 332a. By maintaining this state, it is possible to prevent liquid leakage from the discharge valve main body portion 322 when the nozzle 321 is removed from the discharge valve main body portion 322 and replaced. The urging member 332c can be composed of a similar material to those of the urging members 234 and 244 equipped in the on-off valve 230 and the switching valve 240.

The urging member 332c is supported by a support member 332e installed on the upper side of the discharge valve main body portion 322. The end portion on the other end side of the urging member 332c is fixed to the piston 332b in a state in which one end side is fixed to the support member 332e.

The piston 332b is driven by the air pressure supplied through the air supply port 324 in a direction (upward in Fig. 1) separating from the intake port 13 to resist the urging force of the urging member 332c. By adjusting the air pressure, both the first nozzle valve 331 and the second nozzle valve 332 are maintained in the valve opened state during the discharge operation as illustrated in Fig. 4(A) and the first nozzle valve 331 can be put into the closed state while the second nozzle valve 332 is maintained in the opened state during the standby operation as illustrated in Fig. 4(B).

(Control unit)

As illustrated in Fig. 1, the control unit 400 is equipped with a storage unit 410, a calculation unit 420, and an input and output unit 430, and the respective units are joined to each other via electrical wiring and the like for transmitting and receiving signals.

The input and output unit 430 is joined to each of the resin supply section 100, the pump section 200, and the head section 300. The storage unit 410 is composed of ROM and RAM and stores in advance data such as upper limit pressure Pmax, lower limit pressure Pmin, target pressure Pt, correction pressure Pc, and set pressure Ps and the like to be described later.

The calculation unit 420 is mainly composed of a CPU and receives data of the pressure between pumps P1 detected by the first pressure sensor 21 and the discharge pressure P2 detected by the second pressure sensor 22, and the like via the input and output unit 430. The calculation unit 420 calculates the rotating speeds of the first gear pump 211 and the second gear pump 212 and the like based on the data read from the storage unit 410 and the data received from the input and output unit 430.

The control signal based on the calculated data is transmitted to each of the resin supply section 100, the pump section 200, and the head section 300 via the input and output unit 430. In this way, the control unit 400 controls the pressure between pumps P1, the discharge pressure P2, and the like and performs the control of discharge operation and standby operation, the control of back flow suppression and the preliminary pressurization during the standby

operation, and the like.

(Mechanical foaming method)

Hereinafter, a mechanical foaming method for producing the foam M using the mechanical foaming apparatus 10 having a configuration as described above will be described with reference to Fig. 5.

Fig. 5 is a flowchart for explaining the mechanical foaming method according to an embodiment of the present invention.

The mechanical foaming method is generally composed of discharge operation (steps S11 to S15), standby operation (steps S16 to 20), restart of discharge operation (step S21), and stop of discharge operation (step S22) as illustrated in Fig. 5.

First, the discharge operation (steps S11 to S15) will be described. When the discharge operation is started, the control unit 400 opens the on-off valve 230, the switching valve 240, the first nozzle valve 331, and the second nozzle valve 332 as well as drives the resin supply section 100, the gas supply unit 220, the first gear pump 211, the second gear pump 212, the mixer 310, and the discharge unit 320 to discharge the foamable material M0 from the discharge unit 320 Hereinafter, a method for discharging the foamable material M0 by the respective units of the apparatus will be described in detail.

First, the resin M1 that is the curable composition for mechanical foaming which has a complex viscosity $\eta^*$ satisfying the conditions (A) and (B) of the present invention is supplied from the resin tank 101 of the resin supply section 100 to the first gear pump 211 via the flow channel 11 (step S11).

Next, the first gear pump 211 and the second gear pump 212 are rotationally driven so that the second gear pump 212 is faster than the first gear pump 211 (step S12). By this, the amount (volume) of the resin M1 flowing out from the second pipe 12b by the second gear pump 212 is larger than the amount of the resin M1 flowing into the second pipe 12b by the first gear pump 211. For this reason, suction pressure is generated in the second pipe 12b according to the volume of the decreased amount of the resin M1.

Next, the on-off valve 230 is opened to communicate the second pipe 12b with the gas supply unit 220. At this time, the gas M2 is sucked from the gas supply unit 220 by the suction pressure in the second pipe 12b, and the gas M2 in a state of being pumped by the gas supply unit 220 and pressurized is mixed into the second pipe 12b. By this, the foamable material M0 in which the gas M2 is mixed in the resin M1 is produced (step S13). Incidentally, it is preferable to open the on-off valve 230 when a predetermined time, for example, 0.1 to 0.5 seconds has elapsed after the first gear pump 211 and the second gear pump 212 are rotationally driven (step S12). By this, the second pipe 12b and the gas supply unit 220 can be communicated with each other in a state in which the suction pressure is generated in the second pipe 12b, and it is thus possible to suppress the back flow of the resin M1 to the gas supply unit 220.

Next, the foamable material M0 pumped from the second gear pump 212 is delivered from the inlet portion 311 of the mixer 310 to the mixing chamber 313. When the rotor 314 is rotated by the motor 315, the blades 314b are rotationally driven around the rotor shaft 314a to stir the foamable material M0 in the mixing chamber 313 (step S14). By this, the gas M2 in the foamable material M0 is refined and dispersed by the shear force. Furthermore, when stirring is performed, the gas (bubbles) M2 is evenly dispersed and the gas (bubbles) M2 does not rise to the liquid surface (the liquid surface of the foamable material M0 in the mixing chamber 313) but is finely and uniformly dispersed regardless of the kind and cured form of the curable resin in the resin M1 that is the curable composition for mechanical foaming which has a complex viscosity $\eta^*$ satisfying the conditions (A) and (B) of the present invention. The number of revolutions of the rotor 314 can be set to, for example, 50 to 1000 rpm.

Next, the foamable material M0 stirred by the mixer 310 is delivered from the outlet portion 312 of the mixer 310 to the communication channel 322a equipped in the discharge unit 320. The foamable material M0 is discharged from the discharge port 321a of the nozzle 321 into the atmospheric air via the communication channel 322a. The gas M2 in the foamable material M0 discharged into the atmospheric air is released from the pressurized state and is cured or solidified in the expanded and foamed state to produce the foam M (step S15). Furthermore, when the stirred foamable material M0 is mechanically foamed, the gas (bubbles) M2 does not rise to the surface (liquid surface) and the gas (bubbles) M2 is finely and evenly dispersed, thus the gas (bubbles) M2 in the foamable material M0 discharged into the atmospheric air is released from the pressurized state and is cured or solidified in the expanded and foamed state, and as a result, the foam M having a favorable foamed state (a state in which bubbles having a substantially even size are evenly dispersed in the foam M) and an even (favorable) foamed state from the appearance is produced. Incidentally, for convenience of explanation, the respective operations of the discharge operation (steps S11 to S15) have been described in due order, but the respective operations are practically performed almost at the same time.

Next, the standby operation (steps S16 to S20) will be described. The standby operation is, for example, control performed when the discharge operation is restarted again after the use of the mechanical foaming apparatus 10 has been temporarily interrupted. By this, after the discharge operation is restarted, it is possible to produce the foam M having a desired expansion ratio and a desired discharge amount immediately after restart without performing testing

shot to stabilize the discharge amount.

When the operation state is switched from the standby operation to the discharge operation, the control unit 400 closes the on-off valve 230, the switching valve 240, the first nozzle valve 331, and the second nozzle valve 332 as well as stops the works of the resin supply section 100, the gas supply unit 220, the first gear pump 211, the second gear pump 212, and the discharge unit 320 to put the state into a stopped state in which the discharge of the foamable material M0 is stopped (step S16). Incidentally, it is preferable that the mixer 310 is left to work even during the standby operation. By leaving the mixer 310 to work, the gas M2 in the foamable material M0 can be maintained in a homogeneously dispersed state without binding and expanding.

As illustrated in Fig. 2(A), when the foamable material M0 flows into the second pipe 12b during the standby operation, the pressure between pumps P1 detected by the first pressure sensor 21 increases. The stopped state is maintained until the pressure between pumps P1 reaches the preset upper limit pressure Pmax (step S17: NO).

In a case in which the pressure between pumps P1 reaches the upper limit pressure Pmax (step S17: YES), the control of back flow suppression is performed (step S18). Incidentally, the details of the control of back flow suppression will be described later.

Next, the switching valve 240 is opened (step S19). By this, the pressure between the second gear pump 212 and the discharge unit 320 becomes uniform before the preliminary pressurization is performed.

Next, preliminary pressurization is performed to increase the discharge pressure P2 to a preset set pressure Ps (step S20). Incidentally, the details of preliminary pressurization will be described later.

Next, the discharge operation is restarted (step S21). As the discharge operation, operations similar to the steps S11 to S15 described above are performed.

Finally, the discharge operation is stopped and ended (step S22). When the discharge operation is stopped, the works of the respective sections of the mechanical foaming apparatus 10 are stopped.

<Control of back flow suppression (step S18)>

Next, the control of back flow suppression (step S18) will be described with reference to Figs. 2 and 6.

Fig. 2 is a diagram for explaining the control of back flow suppression. Fig. 6 is a subroutine flowchart for explaining the control of back flow suppression.

During the standby operation, suction pressure is generated in the second pipe 12b, the pressure between pumps P1 is in a low state, and thus a pressure difference is generated between the downstream side and upstream side of the second gear pump 212. By this pressure difference, the foamable material M0 on the downstream side of the second gear pump 212 flows into the second pipe 12b through the meshing of the gears of the second gear pump 212 as indicated by the arrow in Fig. 2(A).

When the foamable material M0 flows into the second pipe 12b, the pressure between pumps P1 increases. When the on-off valve 230 is opened to restart the discharge operation in a state in which the pressure between pumps P1 is high, the resin M1 and the foamable material M0 flow back to the gas supply unit 220 side in some cases. By this, the mixing ratio of the resin M1 to the gas M2 fluctuates and it is difficult to adjust the expansion ratio in some cases. Hence, the control of back flow suppression (step S18) of controlling the pressure between pumps P1 in a predetermined range is performed in order to prevent the resin M1 and the foamable material M0 from flowing back to the gas supply unit 220 when the operation state is switched from the standby operation to the discharge operation.

First, as illustrated Fig. 2(B), the second gear pump 212 is rotationally driven and at least a part of the foamable material M0 in the second pipe 12b is delivered to the downstream side of the second gear pump 212 (step S101). By this, the pressure between pumps P1 in the second pipe 12b is decreased to a pressure lower than the upper limit pressure Pmax. The upper limit pressure Pmax is set to a pressure at which the back flow of the resin M1 and the foamable material M0 to the gas supply unit 220 does not occur when the on-off valve 230 is opened.

Incidentally, when the second gear pump 212 is worked during the standby operation such as control of back flow suppression (step S18) and preliminary pressurization (step S20), the second gear pump 212 is rotated at a lower speed than when being rotated during the discharge operation. By this, it is possible to prevent the pressure between pumps P1 and the discharge pressure P2 from suddenly increasing during the standby operation.

The rotational operation of the second gear pump 212 is maintained until the pressure between pumps P1 reaches the preset lower limit pressure Pmin (step S102: NO) .

In a case in which the pressure between pumps P1 reaches the lower limit pressure Pmin (step S102: YES), the rotation of the second gear pump 212 is stopped (step S103), and the treatment proceeds to the treatment of step S17 in Fig. 5. In this way, the control of back flow suppression is completed.

In a case in which if the pressure between pumps P1 reaches the upper limit pressure Pmax (step S17: YES) after the rotation of the second gear pump 212 has been stopped (step S103), the control of back flow suppression is performed again (step S18). By repeatedly performing the control of back flow suppression (step S18) in this way, the pressure between pump P1 is maintained at a pressure between the upper limit pressure Pmax and the lower limit

pressure Pmin.

By performing the control of back flow suppression (step S18), the pressure between pumps P1 is controlled so as not to be higher than the upper limit pressure Pmax. The upper limit pressure Pmax is set to a pressure at which the resin M1 and the foamable material M0 do not flow back to the gas supply unit 220 when the on-off valve 230 is opened, and it is thus possible to suppress back flow of the foamable material M0 to the gas supply unit 220 via the on-off valve 230 when the discharge operation is started. In addition, the pressure between pumps P1 is controlled so as not to be lower than the lower limit pressure Pmin, and it is thus possible to suppress an excessive increase in suction pressure generated in the flow channel 11 between the respective gear pumps 211 and 212 when the discharge operation is started and to suppress fluctuation in the expansion ratio.

<Preliminary pressurization (step S20)>

Next, the preliminary pressurization (step S20) will be described with reference to Fig. 3, Fig. 4(A), (B), and Figs. 7 to 9.

Fig. 3 is a diagram for explaining the preliminary pressurization (step S20). Fig. 4(A) is a diagram illustrating the state of the discharge unit 320 during the discharge operation, and Fig. 4(B) is a diagram illustrating the state of the discharge unit 320 during the standby operation. Fig. 7 is a subroutine flowchart for explaining the preliminary pressurization (step S20) in Fig. 5, Fig. 8(A) is a graph illustrating the time course of the discharge pressure P2 during the discharge operation, Fig. 8(B) is a graph illustrating the time course of the discharge pressure P2 during the preliminary pressurization, and Fig. 9 is a diagram illustrating the state of the foam M discharged in a bead shape under the discharge conditions illustrated in Fig. 8(A).

When the operation state is switched from the standby operation illustrated in Fig. 4(B) to the discharge operation illustrated in Fig. 4(A), the first valve body 331a equipped in the first nozzle valve 331 is driven in the direction (upward in Fig. 4) separating from the discharge port 321a and a part of the first valve body 331a is accommodated in the discharge valve main body portion 322. For this reason, the volume inside the nozzle 321 increases by the volume of the part of the first valve body 331a moved from the nozzle 321 to the discharge valve main body portion 322. While the volume inside the nozzle 321 increases, the amount of foamable material M0 inside the nozzle 321 does not change. For this reason, the discharge pressure P2 decreases immediately after the discharge operation is started.

For the reasons, the discharge pressure P2 decreases to the pressure Pu from the time (time t1 in Fig. 8(A)) at which the first nozzle valve 331 is opened to the time (time t2 in Fig. 8(A)) at which the discharge operation is started as illustrated in Contrast Example of Fig. 8(A). The discharge amount of the foamable material M0 per unit time depends on the discharge pressure P2. For this reason, it is required to increase the discharge pressure P2 until the discharge pressure P2 reaches the pressure (hereinafter, referred to as the target pressure Pt) for obtaining the desired discharge amount of the foamable material M0 per unit time from the pressure Pu after the discharge operation is started.

The discharge amount of the foamable material M0 per unit time gradually increases from the time (time t2 in Fig. 8(A)) at which the discharge operation is started to the time (time t3 in Fig. 8(A)) at which the pressure reaches the target pressure Pt, and there is thus a case in which the width of the foam M discharged in a bead shape becomes ununiform as illustrated in Fig. 9(A). Hence, the preliminary pressurization (step S20) is performed to increase the discharge pressure P2 to a preset set pressure Ps in consideration of the pressure (hereinafter, referred to as correction pressure Pc) that decreases at the start of the discharge operation.

The set pressure Ps is a pressure obtained by adding the target pressure Pt and the correction pressure Pc (Equation (1)). It is preferable that Pt is 2.0 to 3.0 MPa and Pc is 0.1 to 1.0 MPa.

[Mathematical. 1]

$$Ps = Pt + Pc \cdots (1)$$

Here, the correction pressure Pc is the differential pressure between the target pressure Pt and the pressure Pu in Contrast Example of Fig. 8(A) (Equation (2)). In the present embodiment, the pressure Pu is set to the lower limit value of the discharge pressure P2 that is decreased at the start of the discharge operation performed before the standby operation.

[Mathematical. 2]

$$Pc = Pt - Pu \cdots (2)$$

In Contrast Example 1 and Contrast Example 2 of Fig. 8(B), the relation between the discharge pressure P2 and the time when the preliminary pressurization is continuously performed at a constant pressure is illustrated.

In a case in which the first gear pump 211 and the second gear pump 212 are rotationally driven at a relatively high speed to increase the discharge pressure P2 to the set pressure Ps as in Contrast Example 1, there is a case in which overrun to a pressure higher than the set pressure Ps occurs since the discharge pressure P2 rapidly increases.

In addition, in a case in which the first gear pump 211 and the second gear pump 212 are rotationally driven at a relatively low speed to increase the discharge pressure P2 to the set pressure Ps as in Contrast Example 2, it takes time to increase the discharge pressure P2 to the set pressure Ps.

On the other hand, in the present embodiment, the preliminary pressurization is performed in two stages as illustrated in Fig. 8(B). First, in the first stage, the first gear pump 211 and the second gear pump 212 are rotationally driven to increase the discharge pressure P2 to the first set pressure Pr that is a pressure lower than the set pressure Ps (time t1 in Fig. 8 (B)). Next, in the second stage, the first gear pump 211 and the second gear pump 212 are rotationally driven at lower speeds than in the first stage to drop the pressurizing speed and increase the discharge pressure P2 to the set pressure Ps (time t2 in Fig. 8(B)). By this, the discharge pressure P2 can be increased to the set pressure Ps while aiming shortening of the pressurization time and suppressing overrun due to rapid pressurization.

Hereinafter, the control of preliminary pressurization (step S20) will be described in detail with reference to Fig. 3 and Fig. 7.

First, in a state in which the switching valve 240 is opened during the standby operation as illustrated in Fig. 3(A), the first gear pump 211 and the second gear pump 212 are rotationally driven as illustrated in Fig. 3(B), the on-off valve 230 is put into an opened state, and the gas supply unit 220 is driven to perform the first-stage pressurization (step S201). Similarly to that during the discharge operation, the first gear pump 211 and the second gear pump 212 are rotationally driven so that the second gear pump 212 is faster than the first gear pump 211. At this time, the ratio between the rotating speeds of the first gear pump 211 and the second gear pump 212 is the same as the ratio during the discharge operation. Moreover, the rotating speeds of the first gear pump 211 and the second gear pump 212 are set to be lower than those during the discharge operation.

The first gear pump 211, the second gear pump 212, and the gas supply unit 220 are worked until the discharge pressure P2 detected by the second pressure sensor 22 reaches the preset first set pressure Pr (step S202: NO).

The first set pressure Pr can be set to, for example, a value to be 90% of the set pressure Ps. Incidentally, the first set pressure Pr is not particularly limited as long as it is lower than the set pressure Ps.

In a case in which the discharge pressure P2 reaches the preset first set pressure Pr (step S202: YES), the second stage pressurization is performed in which the first gear pump 211 and the second gear pump 212 are rotationally driven at lower speeds than that in the first stage (step S203).

The first gear pump 211, the second gear pump 212, and the gas supply unit 220 are worked until the discharge pressure P2 reaches the set pressure Ps (step S204: NO).

The preliminary pressurization is completed when the discharge pressure P2 reaches the set pressure Ps (step S204: YES), and the treatment proceeds to the treatment of step S21 in Fig. 5.

The preliminary pressurization increases the discharge pressure P2 to the set pressure Ps set in consideration of the correction pressure Pc that is the pressure decreasing from the target pressure Pt when the discharge operation is started. For this reason, in a case in which the preliminary pressurization is performed before the start of the discharge operation, the discharge pressure P2 decreases by the correction pressure Pc after the start of the discharge operation as illustrated in Fig. 8(A), and it is thus possible to control the discharge pressure P2 to a value close to the target pressure Pt from the time at which the discharge operation is started. Hence, it is possible to diminish the difference between the discharge pressure P2 and the target pressure Pt when the discharge operation is started. By this, the discharge amount of the foam M becomes uniform and the width of the foam M discharged in a bead shape can be formed to be substantially constant as illustrated in Fig. 9(B).

As described above, in the present embodiment, when the pressure between pumps P1 reaches the preset upper limit pressure Pmax during the standby operation, control is performed in which the second gear pump 212 is rotationally driven and at least a part of the foamable material M0 in the flow channel 11 between the first gear pump 211 and the second gear pump 212 is delivered to the downstream side of the second gear pump 212 to decrease the pressure in the flow channel 11 to a pressure lower than the upper limit pressure Pmax. The upper limit pressure Pmax is set to a pressure at which the resin M1 and the foamable material M0 do not flow back to the gas supply unit 220 when the on-off valve 230 is opened, and it is thus possible to suppress back flow of the foamable material M0 to the gas supply unit 220 when the discharge operation is started. By this, the mixing ratio of the resin M1 to the gas M2 does not fluctuate in the gas-liquid mixing portion 11a and a desired expansion ratio can be stably obtained.

In addition, when the pressure between pumps P1 reaches the preset lower limit pressure Pmin during the standby operation, the rotation of the second gear pump 212 is stopped and the pressure between pumps P1 is maintained at a pressure between the upper limit pressure Pmax and the lower limit pressure Pmin. The pressure between pumps P1 is controlled so as not to be lower than the lower limit pressure Pmin, and it is thus possible to suppress an excessive increase in suction pressure between the respective gear pumps 211 and 212 when the discharge operation is started. By this, it is possible to suppress an increase in supply amount of the gas M2 due to an increase in suction pressure

between the respective gear pumps 211 and 212 and to more reliably obtain a desired expansion ratio.

In addition, the pump section further has a switching valve 240 that is disposed on the downstream side of the flow channel 11 with respect to the second gear pump 212 and can switch the communication state between the second gear pump 212 and the discharge unit 320. By this, by keeping the switching valve 240 is in the closed state during the standby operation, it is thus possible to more reliably suppress the flow of the foamable material M0 into the second pipe 12b via the second gear pump 212.

In addition, when the second gear pump 212 is worked during the standby operation, the second gear pump 212 is rotated at a lower speed than when being rotated during the discharge operation. By this, it is possible to prevent the pressure between pumps P1 and the discharge pressure P2 from suddenly increasing during the standby operation.

In addition, the first gear pump 211, the second gear pump 212, and the gas supply unit 220 are worked during the standby operation to deliver the foamable material M0 into the flow channel 11 and perform preliminary pressurization of increasing the discharge pressure P2 to the set pressure Ps. By this, it is possible to diminish the difference between the discharge pressure P2 and the target pressure Pt when the discharge operation is started. For this reason, the discharge amount of the foam M becomes uniform and the width of the foam M discharged in a bead shape can be formed to be substantially constant.

In addition, in the discharge pressure P2, the pressure obtained by adding the target pressure Pt at which the desired discharge amount of the foamable material M0 per unit time can be obtained to the correction pressure Pc that is decreasing from the target pressure Pt when the operation state is switched from the standby operation to the discharge operation is set as the set pressure Ps. By pressurizing the pressure to the set pressure Ps before the discharge operation, the discharge pressure P2 decreases by the correction pressure Pc after the start of the discharge operation, and it is thus possible to control the discharge pressure P2 to a value close to the target pressure Pt from the time at which the discharge operation is started. For this reason, the discharge amount of the foam M becomes far more uniform and the width of the foam M discharged in a bead shape can be formed to be substantially constant.

In addition, the preliminary pressurization includes the first stage in which the discharge pressure P2 is increased to a pressure lower than the set pressure Ps and the second stage in which the first gear pump 211 and the second gear pump 212 are rotationally driven at lower speeds than in the first stage. By performing the preliminary pressurization in two stages, the discharge pressure P2 can be increased to the set pressure Ps while aiming shortening of the pressurization time and suppressing overrun due to rapid pressurization.

In addition, before the preliminary pressurization is performed during the standby operation, the switching valve 240 is opened to communicate the second gear pump 212 with the discharge unit 320. The pressure between the second gear pump 212 and the discharge unit 320 becomes uniform before the preliminary pressurization is performed, and it is thus possible to more reliably bring the discharge pressure P2 close to the target pressure Pt when the discharge operation is started.

In addition, during the discharge operation, when the first nozzle valve 331 and the second nozzle valve 332 are opened to discharge the foamable material M0 from the discharge port 321a and the operation state is switched from the discharge operation to the standby operation, the first nozzle valve 331 is closed to stop the discharge of the foamable material M0 from the discharge port 321a. For this reason, it is possible to prevent liquid leakage from the nozzle 321 in the stopped state. In addition, when the discharge operation is stopped and the nozzle 321 is removed from the discharge valve main body portion 322, the second nozzle valve 332 is closed to suppress the outflow of the foamable material M0 from the discharge valve main body portion 322. For this reason, it is possible to prevent liquid leakage from the discharge valve main body portion 322 equipped in the discharge unit 320 when the nozzle 321 is replaced.

In addition, the outlet portion 312 of the mixer 310 is disposed so as to directly face the communication channel 322a of the discharge unit 320. By this, the foamable material M0 is delivered to the discharge unit 320 immediately after being stirred by the mixer 310, and thus the foamable material M0 can be discharged while a state is maintained in which the gas M2 in the foamable material M0 does not bond to expand but is uniformly dispersed until the foamable material M0 is delivered to the discharge unit 320.

The mechanical foaming apparatus and the mechanical foaming method according to the present invention have been described above with reference to embodiments, but the present invention is not limited only to the configuration described in embodiments and can be appropriately modified based on the description of claims.

For example, the pump section according to the embodiment has a switching valve, but is not limited to this, and may not have a switching valve. Even in a configuration in which a switching valve is not equipped, it is possible to suppress back flow of the foamable material to the gas supply unit when the discharge operation is started by controlling the operation of the first gear pump and the second gear pump.

In addition, the on-off valve, the switching valve, the first nozzle valve, and the second nozzle valve are configured by a needle valve, but are not limited to this, and can be configured by, for example, a suck back valve, a rotary valve, a shutter valve, and the like.

In addition, the suction pressure for sucking the gas between the respective gear pumps is a negative pressure,

but is not limited to this as long as it can generate the gas incorporation, and may be 0 or a positive pressure.

In addition, the discharge operation shall include testing shot performed when the work of the apparatus is confirmed.

In addition, the preliminary pressurization is composed of two stages of pressurization but may be composed of three or more stages of pressurization. At that time, the rotating speeds of the first gear pump and the second gear pump are controlled to be slower as the stage proceeds to the next stage.

In addition, in the mechanical foaming method according to the embodiment, preliminary pressurization is performed, but the mechanical foaming method is not limited to this, and the preliminary pressurization may not be performed. Even in this case, a desired discharge amount can be obtained by adjusting the rotating speed of the gear pump or the like during the discharge operation or by performing testing shot at the start of the discharge operation.

Examples

Next, the present invention will be described in more detail with reference to Examples, but the present invention is not limited only to these Examples.

[Examples 1 to 7 and Comparative Examples 1 to 7]

As a liquid (curable composition for mechanical foaming) that constituted a foamable material used for mechanical foaming, the respective products of Examples 1 to 7 and Comparative Examples 1 to 7 (manufactured by ThreeBond Holdings Co., Ltd.) presented in Tables 1 and 2 below were used, and the frequency dependence of the complex viscosity η* of these curable compositions for mechanical foaming before foaming and before curing was examined. Furthermore, the appearance was examined in the state before curing and after foaming, the foamed state after curing depending on the curing conditions was examined, and the results are summarized in Table 1 below together with the curing form and curing conditions of each curable composition for mechanical foaming. Here, in Examples 5 to 7, the curable compositions in which the amounts of filler (silica powder) added were each changed to be 1.2 times, 1.4 times, and 1.8 times the amount of filler (silica powder) added to ThreeBond3081J described in Example 4 were prepared. Hereinafter, ThreeBond (registered trademark) is also abbreviated as TB.

Example 1: TB1152C; without foam stabilizer
Example 2: TB1153C; without foam stabilizer
Example 3: TB1234B; without foam stabilizer
Example 4: TB3081J; without foam stabilizer
Example 5: TB3081J filler 1.2 times; without foam stabilizer
Example 6: TB3081J filler 1.4 times; without foam stabilizer
Example 7: TB3081J filler 1.8 times; without foam stabilizer
Comparative Example 1: TB3164; without foam stabilizer
Comparative Example 2: TB1280E; without foam stabilizer
Comparative Example 3: TB3013Q; without foam stabilizer
Comparative Example 4: TB1207B; without foam stabilizer
Comparative Example 5: TB1217H; without foam stabilizer
Comparative Example 6: TB1539; without foam stabilizer
Comparative Example 7: TB3013M; without foam stabilizer.

(Example 1)

"TB1152C" used as a liquid constituting the foamable material used for mechanical foaming in the present Example is a one-component olefin-based heat curing type curable composition for mechanical foaming which had a complex viscosity η* satisfying the conditions (A) and (B) and is a commercially available product which contains a resin having an allyl group and is used in applications such as olefin-based sealants.

In the present Example, a foam 1 was formed by performing mechanical foaming and then heat curing according to [Examination of foamed state] to be described later using the mechanical foaming apparatus having the configurations illustrated in Fig. 1 to Fig. 4, which was a gear pump type mechanical foaming apparatus in which the control unit rotationally derived the second gear pump when the pressure between pumps reached a preset upper limit pressure during the standby operation and delivered at least a part of the foamable material in the flow channel between the first gear pump and the second gear pump to the downstream side of the second gear pump to decrease the pressure in the flow channel to a pressure lower than the upper limit pressure, and the TB1152C as a liquid for foamable material.

(Example 2)

"TB1153C" used as a liquid constituting the foamable material used for mechanical foaming in the present Example is a one-component olefin-based heat curing type curable composition for mechanical foaming which had a complex viscosity η* satisfying the conditions (A) and (B) and is a commercially available product which contains a resin having an allyl group and is used in applications such as olefin-based sealants for fuel cell.
In the present Example, a foam 2 was formed by performing mechanical foaming and then heat curing according to [Examination of foamed state] to be described later in the same manner as in Example 1 except that the liquid was changed to TB1153C.

(Example 3)

"TB1234B" used as a liquid constituting the foamable material used for mechanical foaming in the present Example is a one-component silicone-based heat curing type curable composition for mechanical foaming which had a complex viscosity η* satisfying the conditions (A) and (B) and is a commercially available product which contains a resin having a vinyl siloxane group and is used in applications such as silicone-based liquid adhesives, sealants, and potting agents.
In the present Example, a foam 3 was formed by performing mechanical foaming and then heat curing according to [Examination of foamed state] to be described later in the same manner as in Example 1 except that the liquid was changed to TB1234B and the curing conditions at the time of curing in [Examination of foamed state] to be described later were changed to the conditions presented in Table 1.

(Example 4)

"TB3081J" used as a liquid constituting the foamable material used for mechanical foaming in the present Example is a one-component acrylate-based photocuring type curable composition for mechanical foaming which had a complex viscosity η* satisfying the conditions (A) and (B) and is a commercially available product which contains a resin having a (meth)acrylic group and is used in applications such as acrylate-based sealants, adhesives, and liquid gaskets.
In the present Example, a foam 4 was formed by performing mechanical foaming according to [Examination of foamed state] to be described later in the same manner as in Example 1 except that the liquid was changed to TB3081J and the curing form and curing conditions in [Examination of foamed state] to be described later were changed to the form and conditions presented in Table 1 and then performing ultraviolet curing. Incidentally, the wavelength of ultraviolet light was 365 nm as the main wavelength emitted from a high pressure mercury lamp.

(Examples 5 to 7)

The liquids constituting the foamable materials used for mechanical foaming in Examples 5, 6, and 7 are all one-component acrylate-based liquids which have a complex viscosity η* satisfying the conditions (A) and (B) and photocuring type curable compositions for mechanical foaming which contain a resin having a (meth)acrylic group.
In these Examples, foams 5 to 7 were formed by performing mechanical foaming according to [Examination of foamed state] to be described later in the same manner as in Example 1 except that the amounts of filler added to TB3081J in Example 4 as the liquid were each changed and the curing form and curing conditions in [Examination of foamed state] to be described later were changed to the form and conditions presented in Table 1 and then performing ultraviolet curing in the same manner as in Example 4.

(Comparative Example 1)

"TB3164" used as a liquid constituting the foamable material in the present Comparative Example is a one-component silicone-based moisture curing type curable composition having a complex viscosity η* which does not satisfy either the condition (A) or the condition (B) and is a commercially available product which contains a resin having a (meth)acryloyl group and a hydrolyzable silyl group and a moisture curable catalyst and is used in applications such as silicone-based ultraviolet curable adhesives, sealants, and coating agents.
In the present Comparative Example, a foam 8 was formed by performing mechanical foaming according to [Examination of foamed state] to be described later in the same manner as in Example 1 except that the liquid was changed to TB3164 and the curing form and curing conditions in [Examination of foamed state] to be described later were changed to the form and conditions presented in Table 1, and then performing moisture curing [curing of the portion not irradiated with ultraviolet light and the deep portion proceeded by moisture if only the surface was irradiated with

ultraviolet light and cured].

(Comparative Example 2)

"TB1280E" used as a liquid constituting the foamable material in the present Comparative Example is a one-component silicone-based moisture curing type curable composition having a complex viscosity η* which does not satisfy either the condition (A) or the condition (B) and is a commercially available product which contains a resin having a hydrolyzable silyl group and a moisture curable catalyst and is used in applications such as silicone-based liquid gaskets.
In the present Comparative Example, a foam 9 was formed by performing mechanical foaming according to [Examination of foamed state] to be described later in the same manner as in Example 1 except that the liquid was changed to TB1280E and the curing form and curing conditions in [Examination of foamed state] to be described later were changed to the form and conditions presented in Table 1, and then performing moisture curing.

(Comparative Example 3)

"TB3013Q" used as a liquid constituting the foamable material in the present Comparative Example is a one-component acrylate-based photocuring type curable composition having a complex viscosity η* which does not satisfy either the condition (A) or the condition (B) and is a commercially available product which contains a resin having a (meth)acrylic group and is used in applications such as acrylate-based sealants for electrical equipment.
In the present Comparative Example, a foam 10 was formed by performing mechanical foaming according to [Examination of foamed state] to be described later in the same manner as in Example 1 except that the liquid was changed to TB3013Q and the curing form and curing conditions in [Examination of foamed state] to be described later were changed to the form and conditions presented in Table 1, and then performing ultraviolet curing in the same manner as in Example 4.

(Comparative Example 4)

"TB1207B" used as a liquid constituting the foamable material in the present Comparative Example is a one-component silicone-based moisture curing type curable composition which had a complex viscosity η* satisfying the conditions (A) and (B) and is a commercially available product which contains a resin having a hydrolyzable silyl group and a moisture curable catalyst and is used in applications such as silicone-based liquid gaskets.
In the present Comparative Example, a foam 11 was formed by performing mechanical foaming according to [Examination of foamed state] to be described later in the same manner as in Example 1 except that the liquid was changed to TB1207B and the curing form and curing conditions in [Examination of foamed state] to be described later were changed to the form and conditions presented in Table 1, and then performing moisture curing.

(Comparative Example 5)

"TB1217H" used as a liquid constituting the foamable material used for mechanical foaming in the present Comparative Example is a one-component silicone-based moisture curing type curable composition having a complex viscosity η* which does not satisfy either the condition (A) or the condition (B) and is a commercially available product which contains a resin having a hydrolyzable silyl group and a moisture curable catalyst and is used in applications such as silicone-based liquid gaskets.
In the present Comparative Example, a foam 12 was formed by performing mechanical foaming according to [Examination of foamed state] to be described later in the same manner as in Example 1 except that the liquid was changed to TB1217H and the curing form and curing conditions in [Examination of foamed state] to be described later were changed to the form and conditions presented in Table 1, and then performing moisture curing.

(Comparative Example 6)

"TB1539" used as a liquid constituting the foamable material in the present Comparative Example is a one-component plant-derived heat curing type curable composition having a complex viscosity η* which does not satisfy the condition (A) but satisfies the condition (B) and is a commercially available product which contains a resin having an isocyanate group and is used in applications such as a one-component low temperature heating quick curing type elastic adhesive prepared using a polymer obtained by modifying castor oil (ricinoleic acid as a main component).
In the present Comparative Example, a foam 13 was formed by performing mechanical foaming according to [Examination of foamed state] to be described later in the same manner as in Example 1 except that the liquid was changed to TB1539 and the curing conditions in [Examination of foamed state] to be described later were changed to

the conditions presented in Table 1, and then performing heat curing.

(Comparative Example 7)

"TB3013M" used as a liquid constituting the foamable material in the present Comparative Example is a one-component acrylate-based photocuring type curable composition having a complex viscosity η* which does not satisfy either the condition (A) or condition (B) and is a commercially available product which contains a resin having a (meth)acrylic group and is used in applications such as acrylate-based adhesives, sealants, and coating agents.
In the present Comparative Example, a foam 14 was formed by performing mechanical foaming according to [Examination of foamed state] to be described later in the same manner as in Example 1 except that the liquid was changed to TB3013M and the curing conditions in [Examination of foamed state] to be described later were changed to the conditions presented in Table 1, and then performing ultraviolet curing in the same manner as in Example 4.

[Examination of frequency dependence]

The viscosity η* of the liquids used in Examples 1 to 7 and Comparative Examples 1 to 7 at each frequency (f (Hz)) in a 25°C atmosphere adjusted by a temperature control facility was measured using the rheometer HAAKE MARS III manufactured by Thermo Fisher Scientific, Inc. and P35 as a rotor. In order to perform optimal measurement on the liquids used in Examples 1 to 7 and Comparative Examples 1 to 7, the measurement was performed by setting the rotor gap to 0.5 mm or 1 mm and the measurement mode to CD control (0.05 to 0.5%) or CS control (1 to 30 Pa). Detailed conditions are summarized in Table 2 below. In addition, in Tables 1 and 2, the frequency (unit) is described as "f (Hz)", the viscosity (unit) is described as "η* (Pa·s)", and the ratio of η*(0.1 Hz)/η*(10.0 Hz) is described as the "thixotropic ratio". The measurement (calculation) results on the viscosity η* at every frequency and the thixotropic ratio based on these are presented in the columns of "f (Hz)", "η* (Pa·s)", and "thixotropic ratio" in the column of "before curing" of "before foaming" in Table 1.
A strain sensor and a stress sensor were installed in the rheometer HAAKE MARS III, and CD control and CS control were optimally used depending on the liquid. The same value is output if the measurement can be performed using either one.

Strain control: CD (Controlled Distortion) control;

The unit is expressed as "%" since a numerical value obtained by multiplying the dimensionless number (angle θ° in Fig. 10) by 100 is used since the value is strain per unit area.

Stress control: CS (Controlled Shear) control;

The unit is expressed as "Pa" since the value is shear stress per unit area.

[Examination of foamed state]

The liquids of Examples 1 to 7 and Comparative Examples 1 to 7 were mechanically foamed and discharged by the above-described method for manufacturing a foam of the present invention using the mechanical foaming apparatus MFD-10 (mechanical forming dispenser) (mechanical foaming apparatus having the configuration illustrated in Fig. 1 to Fig. 4) manufactured by ThreeBond Holdings Co., Ltd.. Here, the initial discharge pressure was set to 2.8 MPa, the expansion ratio was set to 1.9 times, dry nitrogen gas was used as the gas to be incorporated, and a nozzle having a nozzle inner diameter of 0.5 mm was used. The expansion ratio was set by adjusting the rotating speed of the second gear with respect to the first gear in the two gear pumps in the apparatus. For details, the liquid feeding speed by the gear pump was changed by changing the set value with a dedicated controller and adjusting the rotating speed of the drive motor of the second gear with respect to the first gear. The optimum discharge state was achieved by adjusting the throttle (discharge pressure) of the needle valve at the end through which each liquid was discharged and the rotating speed (discharge speed) of the gear pump. The discharge state was optimized by changing the discharge pressure and speed according to the viscosity of the liquid. In other words, the pressure was increased when the discharge amount was smaller than the required discharge amount, and the pressure was decreased when the discharge amount was larger than the required discharge amount. Specifically, the discharge pressure was adjusted in a range of 2.8 MPa to 3.0 MPa and the discharge speed was kept constant at 0.15 g/sec. For liquids which did not foam after beginning to discharge, the the expansion ratio was increased and foaming was reexamined. In a case in which the liquid did not foam at 1.9 times of the expansion ratio, the expansion ratio was increased up to 3.0 times and foaming was reexamined. Each mechanically foamed liquid was applied to the bead coating on an aluminum plate in a width of 4 mm, a height of

2 mm, and a length of 50 mm, and cured under the optimum curing conditions for each liquid. Here, the curing conditions presented in Table 1 and the standard curing conditions described in known technical data for each liquid were used. After the temperature of the cured product reached 25°C, the cured product was cut with a cutter so that the cross section of the bead was able to be seen, and the cross section of the cured product was visually examined according to the following evaluation criteria. The obtained evaluation results are presented in the column of "foamed state" of "after curing" and "after foaming" in Table 1. In addition, the expansion ratio of 1.9 times and 3.0 times in Table 1 is just the target set in the apparatus (actually, there are cases in which the set ratio is not achieved).

-Evaluation criteria-
o: Bubbles are evenly dispersed
×: Bubbles are unevenly dispersed or bubbles are separated.

[Examination of appearance]

The initial appearance (color) of the liquids used in Examples 1 to 7 and Comparative Examples 1 to 7 was examined. After that, the liquid was foamed in the same manner as in the [Examination of foamed state] and discharged into a polycup having a height of 300 cc in a large amount. After 1 minute, the end portion of the mouth of the polycup was leveled off with a glass plate, and then the appearance of the liquid leveled off in the polycup was visually examined according to the evaluation criteria. The obtained evaluation results are presented in the column of "appearance" of "before curing" and "after foaming" in Table 1.

-Evaluation criteria-
o: Whiter than initial appearance
×: Same as initial appearance.

[Table 1]

| | Product name of liquid (curable composition) | Curing form | Curing condition | Before foaming | | | After foaming | | |
|---|---|---|---|---|---|---|---|---|---|
| | | | | Before curing | | | Before curing | | After curing |
| | | | | Frequency dependence | | | | | |
| | | | | f (Hz) | η *(Pa·s) | Thixotropic ratio | Expansion ratio | Appearance | Foamed state |
| Example 1 | TB1152C | Heat curing | 100°C × 90 minutes | 0.1 | 2830 | 5.1 | 1.9 times | ○ | ○ |
| | | | | 1.0 | 1095 | | | | |
| | | | | 10.0 | 555 | | | | |
| Example 2 | TB1153C | Heat curing | 100°C × 90 minutes | 0.1 | 21890 | 30.6 | 1.9 times | ○ | ○ |
| | | | | 1.0 | 3273 | | | | |
| | | | | 10.0 | 714 | | | | |
| Example 3 | TB1234B | Heat curing | 100°C × 60 minutes | 0.1 | 21690 | 39.6 | 1.9 times | ○ | ○ |
| | | | | 1.0 | 3134 | | | | |
| | | | | 10.0 | 548 | | | | |
| Example 4 | TB3081J | Photocuring | 45 $kJ/m^2$ | 0.1 | 1524 | 11.7 | 1.9 times | ○ | ○ |
| | | | | 1.0 | 354 | | | | |
| | | | | 10.0 | 130 | | | | |
| Example 5 | TB3081J filler 1.2 times | Photocuring | 45 $kJ/m^2$ | 0.1 | 2171 | 14.8 | 1.9 times | ○ | ○ |
| | | | | 1.0 | 449 | | | | |
| | | | | 10.0 | 146 | | | | |
| Example 6 | TB3081J filler 1.4 times | Photocuring | 45 $kJ/m^2$ | 0.1 | 3875 | 19.3 | 1.9 times | ○ | ○ |
| | | | | 1.0 | 719 | | | | |
| | | | | 10.0 | 201 | | | | |
| Example 7 | TB3081J filler 1.8 times | Photocuring | 45 $kJ/m^2$ | 0.1 | 6646 | 26.5 | 1.9 times | ○ | ○ |
| | | | | 1.0 | 1065 | | | | |
| | | | | 10.0 | 251 | | | | |

(continued)

| | Product name of liquid (curable composition) | Curing form | Curing condition | Before foaming | | | After foaming | | |
|---|---|---|---|---|---|---|---|---|---|
| | | | | Before curing | | | Before curing | | After curing |
| | | | | Frequency dependence | | | Expansion ratio | Appearance | Foamed state |
| | | | | f (Hz) | η *(Pa·s) | Thixotropic ratio | | | |
| Comparative Example 1 | TB3164 | Photocuring + moisture curing | 30 kJ/m$^2$ + 25°C × 55% RH × 7 days | 0.1 | 37 | 1.7 | 3.0 times | × | × |
| | | | | 1.0 | 28 | | | | |
| | | | | 10.0 | 22 | | | | |
| Comparative Example 2 | TB1280E | Moisture curing | 25°C × 65% RH × 5 days | 0.1 | 92870 | 51.0 | 3.0 times | × | × |
| | | | | 1.0 | 14740 | | | | |
| | | | | 10.0 | 1820 | | | | |
| Comparative Example 3 | TB3013Q | Photocuring | 45kJ/m2 | 0.1 | 34 | 1.5 | 3.0 times | × | × |
| | | | | 1.0 | 27 | | | | |
| | | | | 10.0 | 22 | | | | |
| Comparative Example 4 | TB1207B | Moisture curing | 25°C × 55% RH × 7 days | 0.1 | 10870 | 44.9 | 3.0 times | × | × |
| | | | | 1.0 | 1440 | | | | |
| | | | | 10.0 | 242 | | | | |
| Comparative Example 5 | TB1217H | Moisture curing | 25°C × 55% RH × 7 days | 0.1 | 488900 | 60.4 | 3.0 times | × | × |
| | | | | 1.0 | 63850 | | | | |
| | | | | 10.0 | 8096 | | | | |
| Comparative Example 6 | TB1539 | Heat curing | 60°C × 90 minutes | 0.1 | 537 | 4.4 | 3.0 times | × | × |
| | | | | 1.0 | 217 | | | | |
| | | | | 10.0 | 122 | | | | |
| Comparative Example 7 | TB3013M | Photocuring | 30 kJ/m2 | 0.1 | 42 | 4.7 | 3.0 times | × | × |
| | | | | 1.0 | 15 | | | | |
| | | | | 10.0 | 9 | | | | |

[Table 2]

| | Product name of liquid (curable composition) | Gap | Control | Condition |
|---|---|---|---|---|
| Example 1 | TB1152C | 1 mm | CD | Strain: 0.05% |
| Example 2 | TB1153C | 1 mm | CD | Strain: 0.05% |
| Example 3 | TB1234B | 1 mm | CD | Strain: 0.1% |
| Example 4 | TB3081J | 1 mm | CD | Strain: 0.1% |
| Example 5 | TB3081J filler 1.2 times | 1 mm | CS | Stress: 1 Pa |
| Example 6 | TB3081J filler 1.4 times | 1 mm | CS | Stress: 1 Pa |
| Example 7 | TB3081J filler 1.8 times | 1 mm | CS | Stress: 1 Pa |
| Comparative Example 1 | TB3164 | 0.5 mm | CS | Stress: 1 Pa |
| Comparative Example 2 | TB1280E | 1 mm | CD | Strain: 0.1% |
| Comparative Example 3 | TB3013Q | 0.5 mm | CD | Strain: 0.5% |
| Comparative Example 4 | TB1207B | 1 mm | CS | Stress: 1 Pa |
| Comparative Example 5 | TB1217H | 1 mm | CS | Stress: 30 Pa |
| Comparative Example 6 | TB1539 | 1 mm | CD | Strain: 0.2% |
| Comparative Example 7 | TB3013M | 1 mm | CS | Stress: 0.3 Pa |

From the results of Tables 1 and 2 above, it has been confirmed that the curable compositions for mechanical foaming of Examples 1 to 7 all have a complex viscosity η* (furthermore, a thixotropic ratio of condition (C)) satisfying the conditions (A) and (B). Moreover, in the foams of Examples 1 to 7 obtained by the method for manufacturing a foam of the present invention, it has been confirmed that the appearance in the state after foaming and before curing and the foamed state after foaming and after curing are all favorable (evaluated as o).

On the other hand, from the results of Tables 1 and 2 above, it has been confirmed that the curable compositions of Comparative Examples 1 to 7 are all curable compositions unsuitable for mechanical foaming since these curable compositions correspond to at least one of those that do not have a complex viscosity η* (furthermore, a thixotropic ratio of condition (C)) satisfying the conditions (A) and (B)or those of which the curing form is a moisture curing form. Hence, in the foams of Comparative Examples 1 to 7, it has been found that the appearance in the state after foaming and before curing and the foamed state after foaming and after curing are all poor (evaluated as x).

This application is based upon and claims the benefit of priority of the prior Japanese Patent Application No. 2018-219339 filed on November 22, 2018, the entire contents of which are incorporated herein by reference.

Reference Signs List

| | |
|---|---|
| 10 | Mechanical foaming apparatus |
| 11 | Flow channel |
| 13 | Intake port |
| 21 | First pressure sensor |
| 22 | Second pressure sensor |
| 100 | Resin supply section (liquid supply section) |
| 200 | Pump section |
| 211 | First gear pump |
| 212 | Second gear pump |
| 220 | Gas supply unit |
| 230 | On-off valve |
| 240 | Switching valve |
| 300 | Head section |
| 310 | Mixer |

| | |
|---|---|
| 311 | Inlet portion |
| 312 | Outlet portion |
| 313 | Mixing chamber |
| 320 | Discharge unit |
| 321 | Nozzle |
| 322 | Discharge valve main body portion |
| 331 | First nozzle valve |
| 332 | Second nozzle valve |
| 400 | Control unit |
| M | Foam |
| M0 | Foamable material |
| M1 | Liquid (curable composition for mechanical foaming) |
| M2 | Gas |
| P1 | Pressure between pumps |
| P2 | Discharge pressure |
| Pmax | Upper limit pressure |
| Pmin | Lower limit pressure |
| Pt | Target pressure |
| Pc | Correction pressure |
| Ps | Set pressure |

**Claims**

1. A curable composition for mechanical foaming having a complex viscosity η* that satisfies the following conditions (A) and (B) in frequency dependence measurement by a rheometer, wherein a curing form of the curable composition for mechanical foaming is not a moisture curing form:

   condition (A): η* at 0.1 Hz and 25°C is in a range of 1000 to 50000 Pa·s; and
   condition (B): η* at 10.0 Hz and 25°C is in a range of 100 to 1000 Pa·s.

2. The curable composition for mechanical foaming according to claim 1, which further satisfies the following condition (C):
   condition (C): (η* at 0.1 Hz)/(η* at 10.0 Hz) at 25°C is in a range of 70.0 or less.

3. The curable composition for mechanical foaming according to claim 1 or 2, wherein η* in the conditions (A) and (B) are 1000 to 30000 Pa·s and 100 to 900 Pa·s, respectively.

4. The curable composition for mechanical foaming according to claim 2 or 3, wherein η*(0.1 Hz)/η*(10.0 Hz) in the condition (C) is 5.0 to 50.

5. The curable composition for mechanical foaming according to any one of claims 1 to 4, wherein the curable composition for mechanical foaming does not comprise a foam stabilizer.

6. The curable composition for mechanical foaming according to any one of claims 1 to 5, wherein the curing form of the curable composition is at least one selected from the group consisting of a room temperature curing form, a heat curing form, and a photocuring form.

7. The curable composition for mechanical foaming according to any one of claims 1 to 6, wherein the curable composition for mechanical foaming comprises a resin having at least one reactive functional group selected from the group consisting of a vinyl group and a cyclic ether group.

8. A method for manufacturing a foam using a mechanical foaming apparatus that produces a foamable material in which a gas is mixed in a liquid and discharges and foams the foamable material, wherein
   the mechanical foaming apparatus includes:

   a flow channel that delivers the liquid and the gas;
   a liquid supply section that supplies the liquid to the flow channel;

a gas supply unit that supplies the gas to the flow channel;
an on-off valve that can switch a communication state between the flow channel and the gas supply unit;
a first gear pump disposed in the middle of the flow channel;
a second gear pump that is disposed on a downstream side of the flow channel with respect to the first gear pump and mixes the gas into the flow channel and generates a suction pressure for producing the foamable material by being rotationally driven at a speed higher than the first gear pump;
a first pressure sensor that detects a pressure between pumps in the flow channel between the first gear pump and the second gear pump;
a discharge unit including a nozzle having a discharge port that discharges the foamable material in which the gas is mixed in the liquid and a discharge valve main body portion having a communication channel that delivers the foamable material delivered from the second gear pump to the nozzle; and
a control unit that controls the respective sections of the apparatus to perform discharge operation of driving the first gear pump, the second gear pump, and the gas supply unit and opening the on-off valve to discharge the foamable material from the discharge unit and standby operation of stopping work of the first gear pump, the second gear pump, and the gas supply unit and closing the on-off valve to interrupt discharge of the foamable material,
the control unit rotationally drives the second gear pump when the pressure between pumps reaches a preset upper limit pressure during the standby operation and delivers at least a part of the foamable material in the flow channel between the first gear pump and the second gear pump to a downstream side of the second gear pump to decrease a pressure in the flow channel to a pressure lower than the upper limit pressure, and
the liquid is the curable composition for mechanical foaming according to any one of claims 1 to 7.

FIG. 1

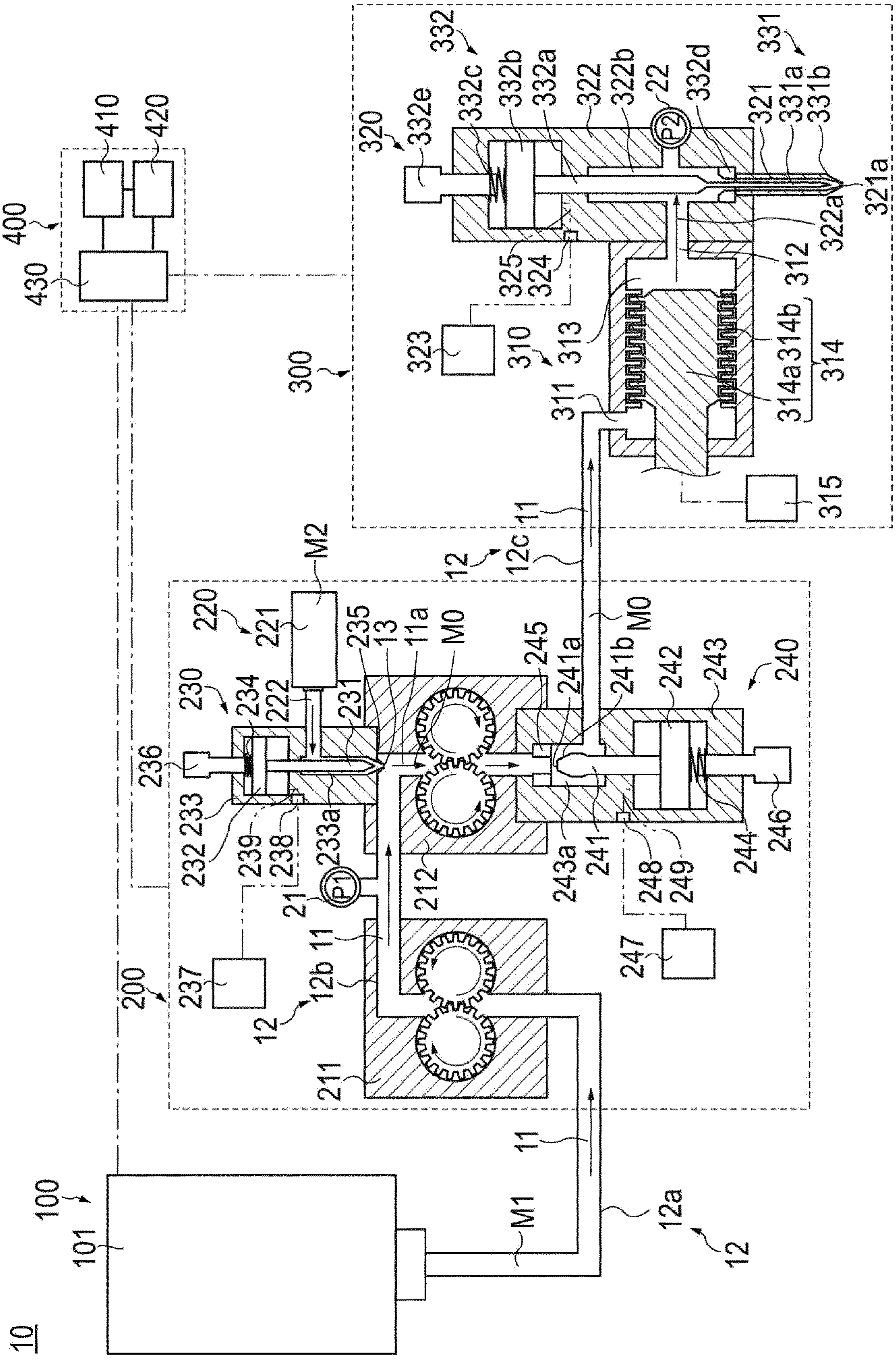
10
100
101
M1
11
12a
12
200
211
12b
237
21
P1
239
238
233a
232
233
236
234
230
222
231
235
13
11a
M0
221
220
M2
212
243a
241
248
249
247
244
246
242
243
240
241b
241a
245
12c
300
310
311
313
314a
314b
314
315
323
325
324
312
322a
321a
331b
331a
321
332d
22
P2
322b
322
332a
332b
332c
332e
320
332
331
400
430
410
420

FIG. 2(A)

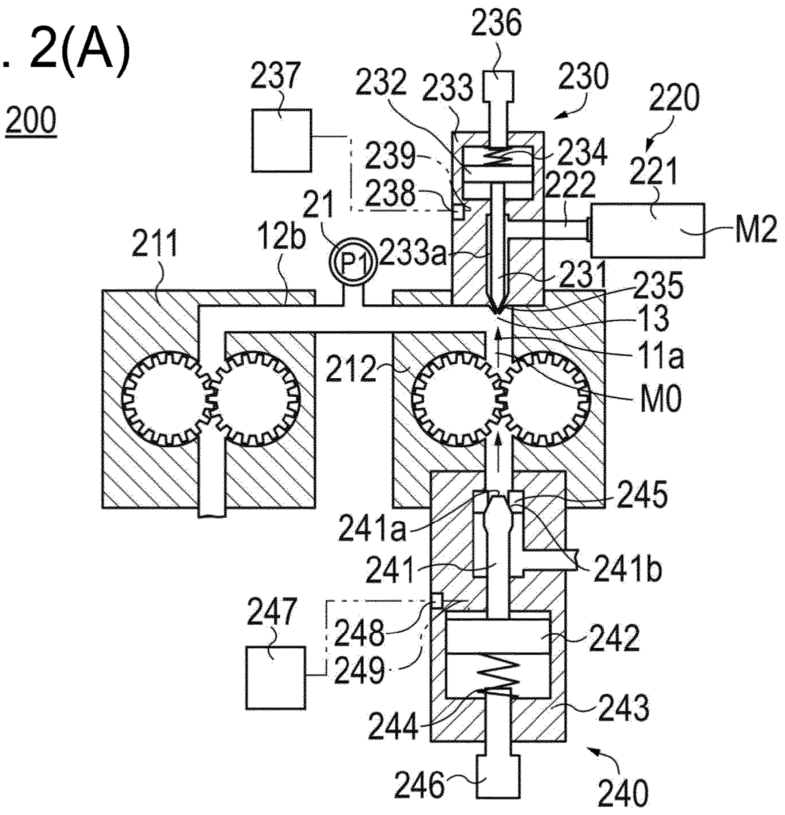
200
236
237
232
233
230
220
239
234
221
238
222
21
M2
211
12b
P1
233a
231
235
13
11a
212
M0
245
241a
241
241b
247
248
242
249
244
243
246
240

FIG. 2(B)

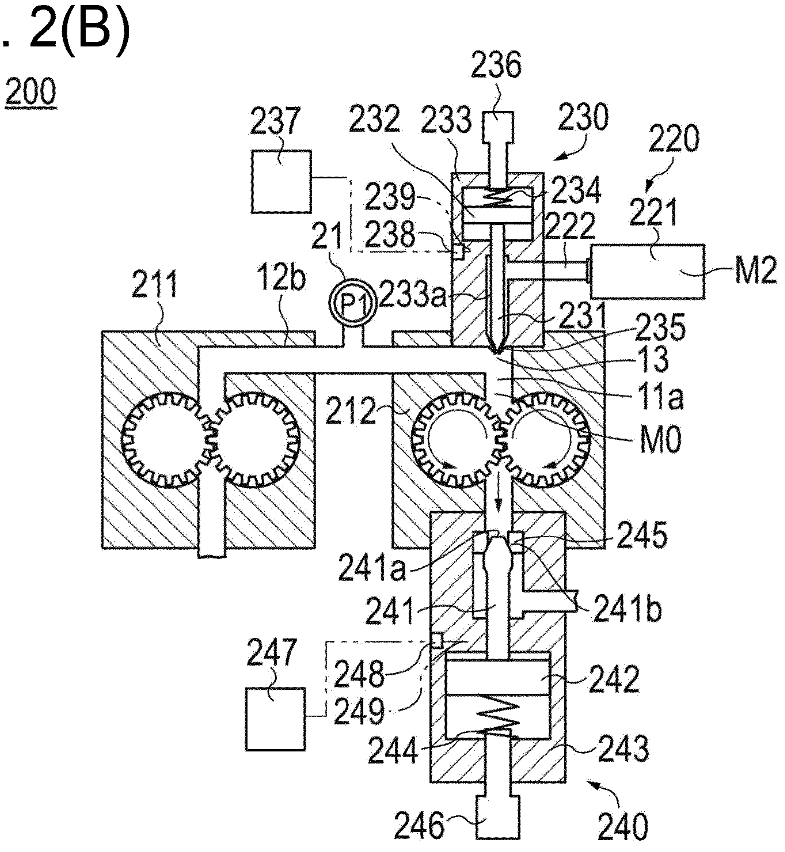
200
236
237
232
233
230
220
239
234
221
238
222
21
M2
211
12b
P1
233a
231
235
13
11a
212
M0
245
241a
241
241b
247
248
242
249
244
243
246
240

FIG. 3(A)

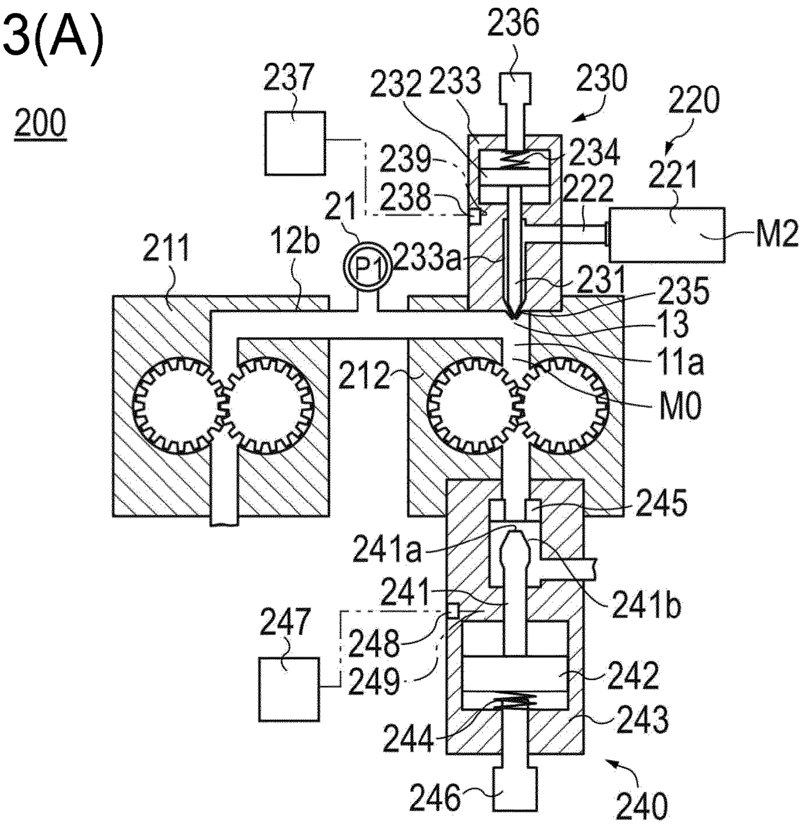
200
236
237
232
233
230
220
239
234
221
238
222
21
M2
211
12b
P1
233a
231
235
13
11a
212
M0
245
241a
241
241b
247
248
242
249
243
244
246
240

FIG. 3(B)

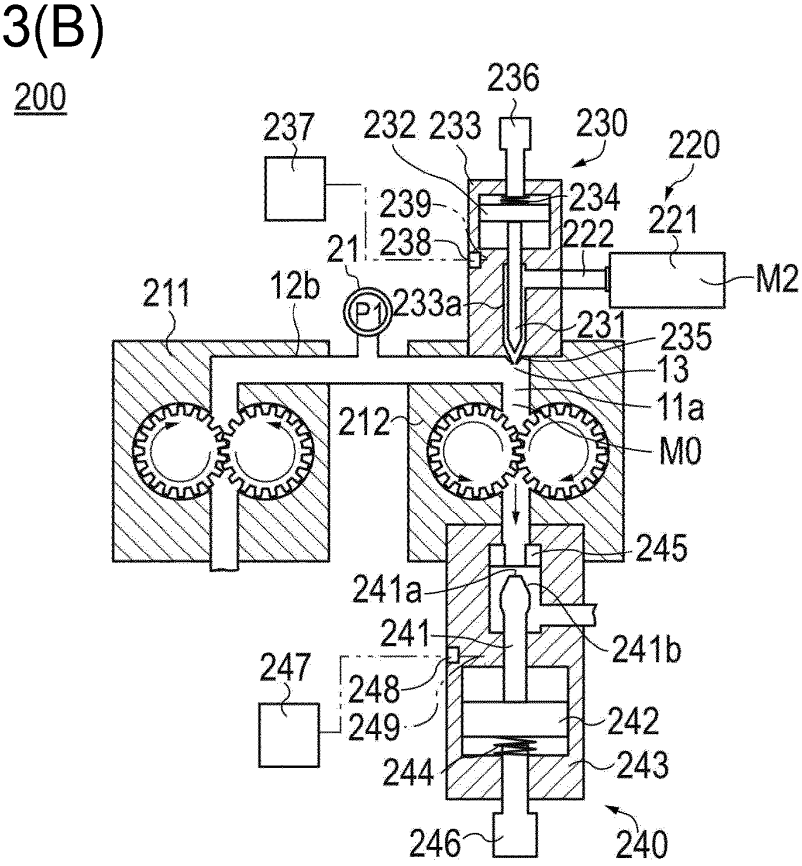
200
236
237
232
233
230
220
239
234
221
238
222
21
M2
211
12b
P1
233a
231
235
13
11a
212
M0
245
241a
241
241b
247
248
242
249
243
244
246
240

FIG. 4(C)

320

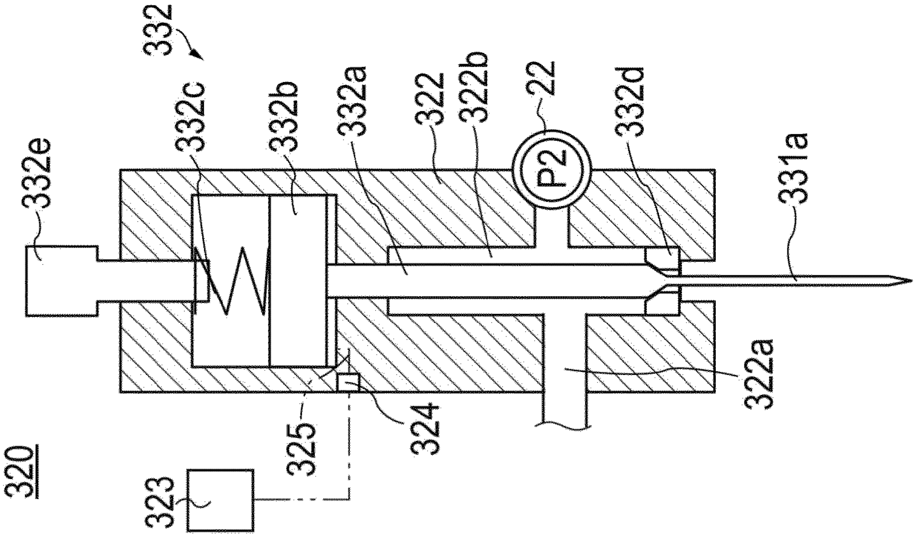


FIG. 4(B)

320

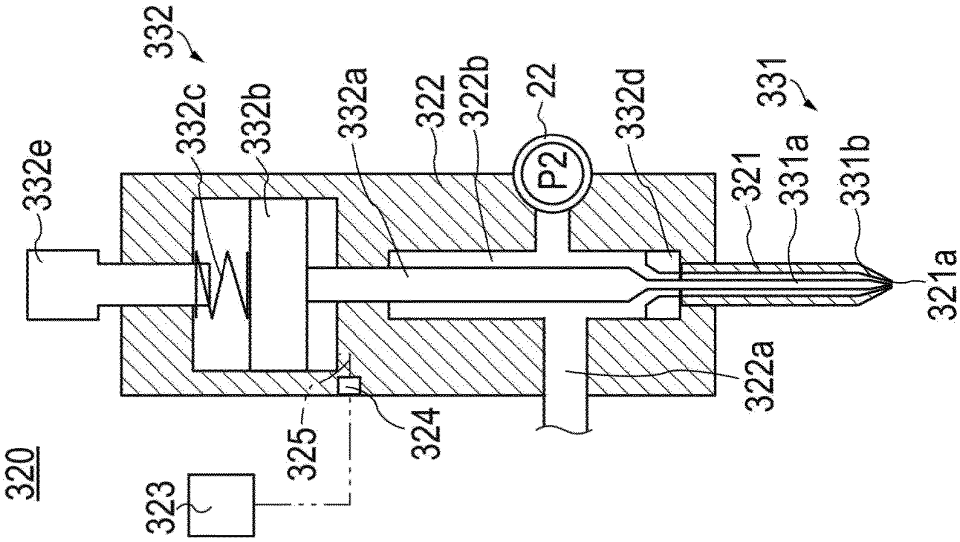


FIG. 4(A)

320

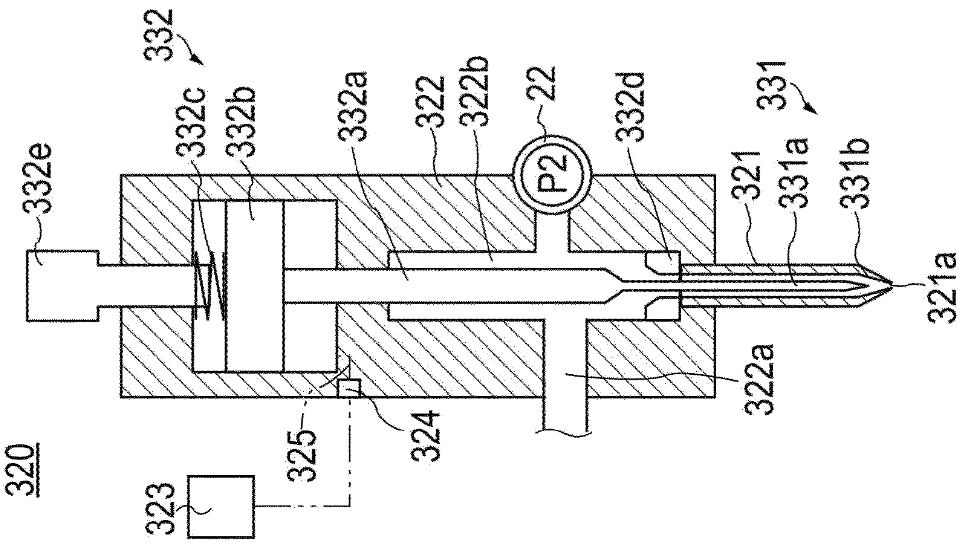

FIG. 5

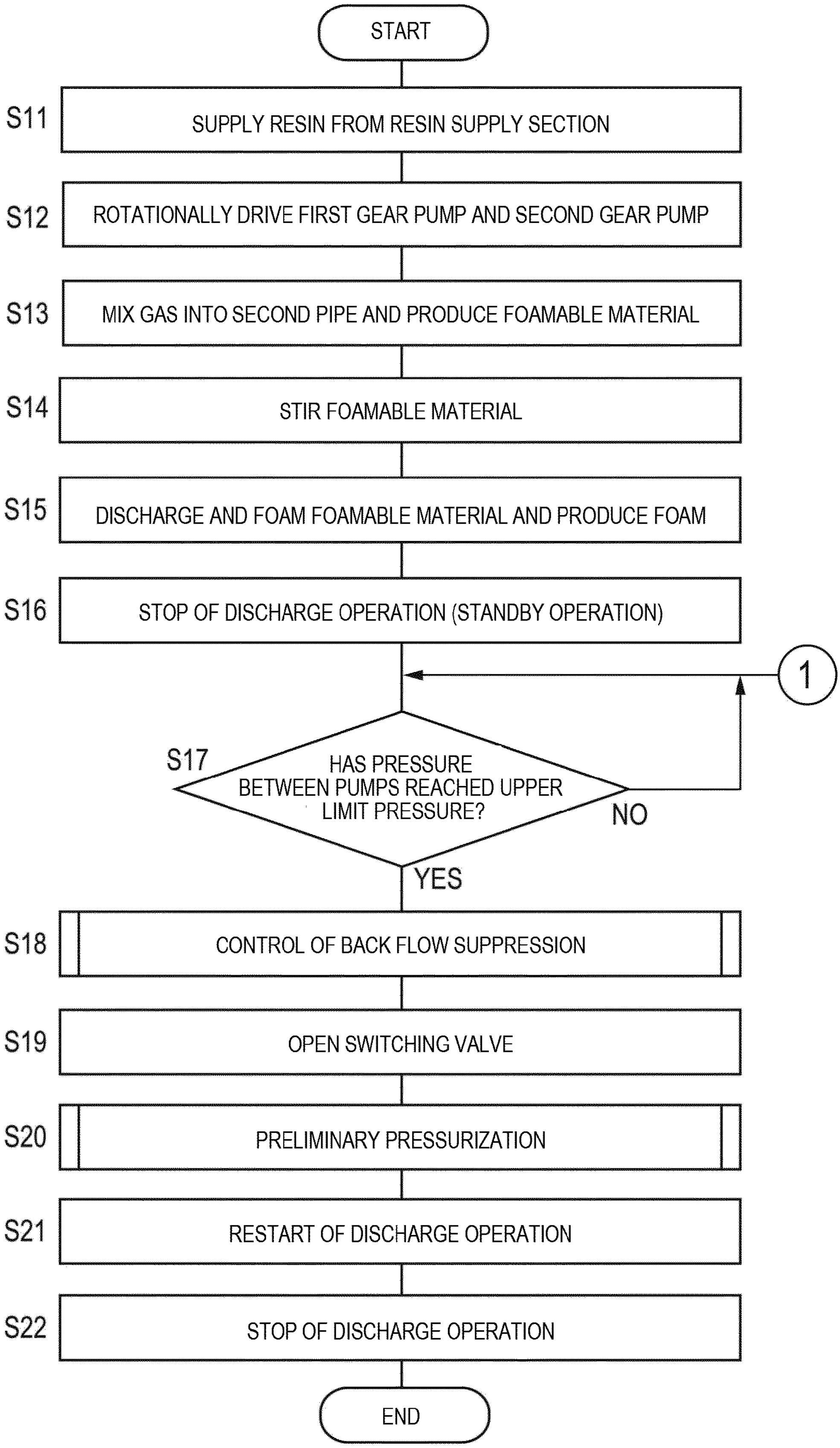
START
S11
SUPPLY RESIN FROM RESIN SUPPLY SECTION
S12
ROTATIONALLY DRIVE FIRST GEAR PUMP AND SECOND GEAR PUMP
S13
MIX GAS INTO SECOND PIPE AND PRODUCE FOAMABLE MATERIAL
S14
STIR FOAMABLE MATERIAL
S15
DISCHARGE AND FOAM FOAMABLE MATERIAL AND PRODUCE FOAM
S16
STOP OF DISCHARGE OPERATION (STANDBY OPERATION)
1
S17
HAS PRESSURE BETWEEN PUMPS REACHED UPPER LIMIT PRESSURE?
NO
YES
S18
CONTROL OF BACK FLOW SUPPRESSION
S19
OPEN SWITCHING VALVE
S20
PRELIMINARY PRESSURIZATION
S21
RESTART OF DISCHARGE OPERATION
S22
STOP OF DISCHARGE OPERATION
END

FIG. 6

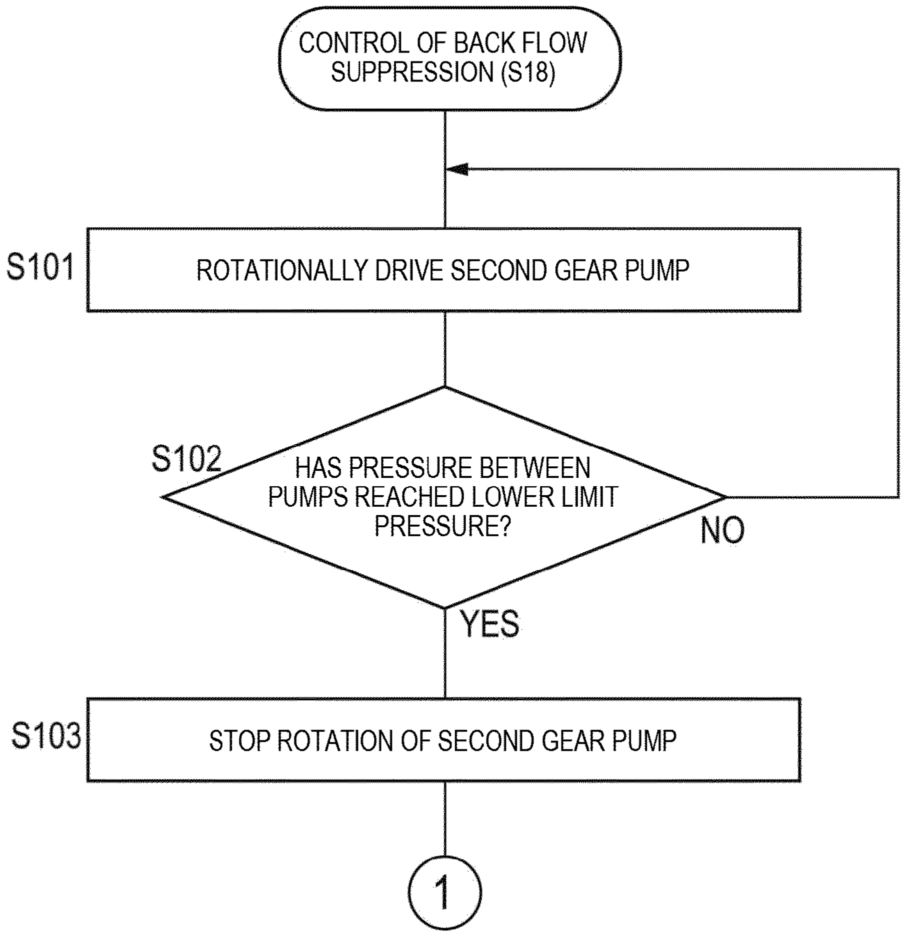
CONTROL OF BACK FLOW SUPPRESSION (S18)
S101
ROTATIONALLY DRIVE SECOND GEAR PUMP
S102
HAS PRESSURE BETWEEN PUMPS REACHED LOWER LIMIT PRESSURE?
NO
YES
S103
STOP ROTATION OF SECOND GEAR PUMP
1

FIG. 7

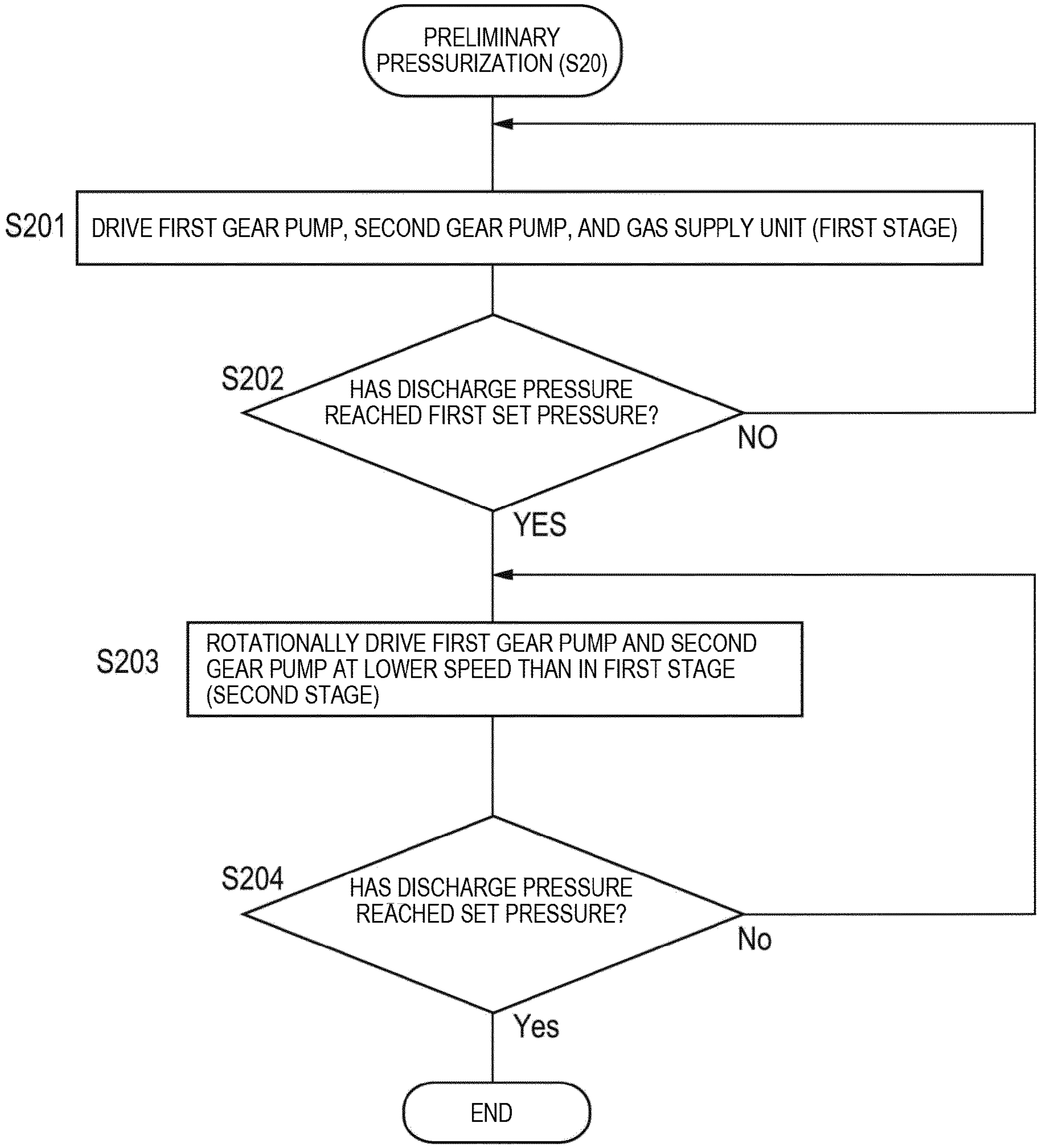
PRELIMINARY PRESSURIZATION (S20)
S201
DRIVE FIRST GEAR PUMP, SECOND GEAR PUMP, AND GAS SUPPLY UNIT (FIRST STAGE)
S202
HAS DISCHARGE PRESSURE REACHED FIRST SET PRESSURE?
NO
YES
S203
ROTATIONALLY DRIVE FIRST GEAR PUMP AND SECOND GEAR PUMP AT LOWER SPEED THAN IN FIRST STAGE (SECOND STAGE)
S204
HAS DISCHARGE PRESSURE REACHED SET PRESSURE?
No
Yes
END

FIG. 8(A)

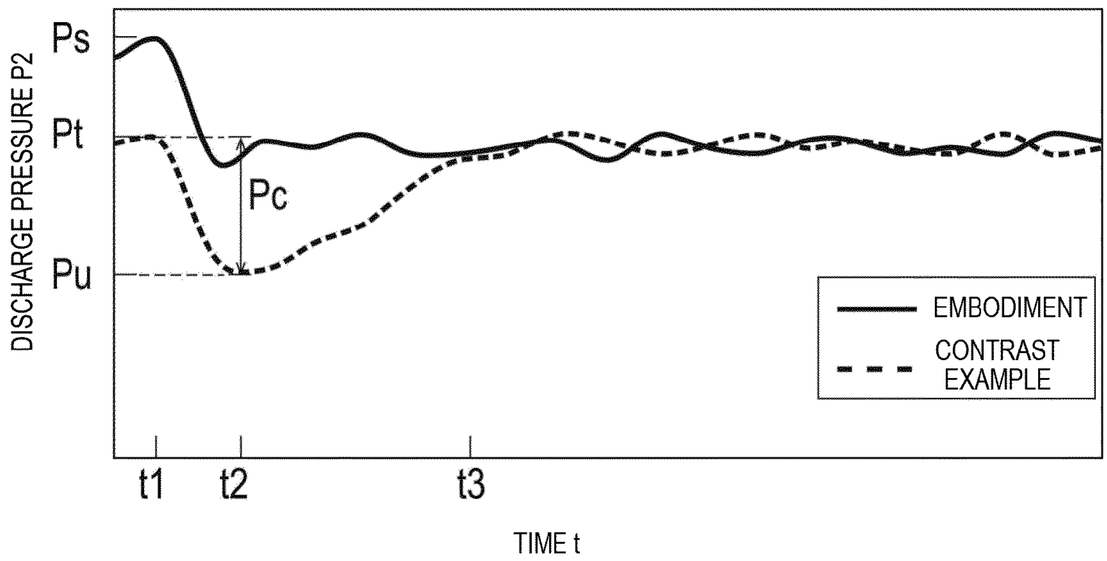
DISCHARGE PRESSURE P2
Ps
Pt
Pc
Pu
EMBODIMENT
CONTRAST EXAMPLE
t1
t2
t3
TIME t

FIG. 8(B)

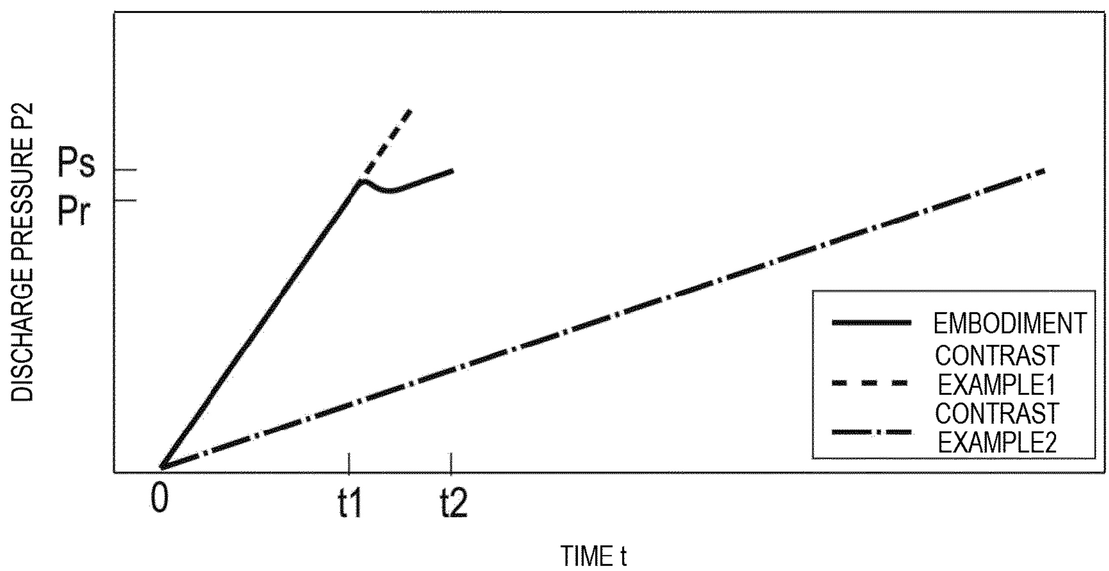
DISCHARGE PRESSURE P2
Ps
Pr
EMBODIMENT
CONTRAST EXAMPLE1
CONTRAST EXAMPLE2
0
t1
t2
TIME t

FIG. 9(A)

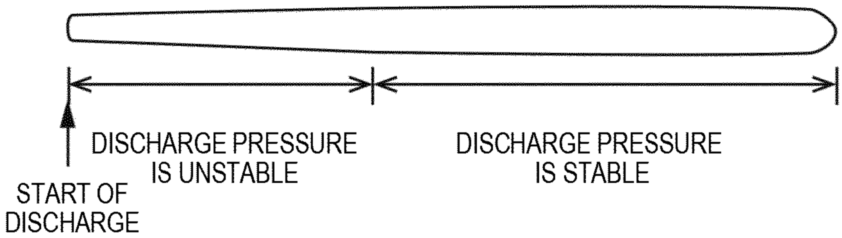
DISCHARGE PRESSURE
IS UNSTABLE
DISCHARGE PRESSURE
IS STABLE
START OF
DISCHARGE

FIG. 9(B)

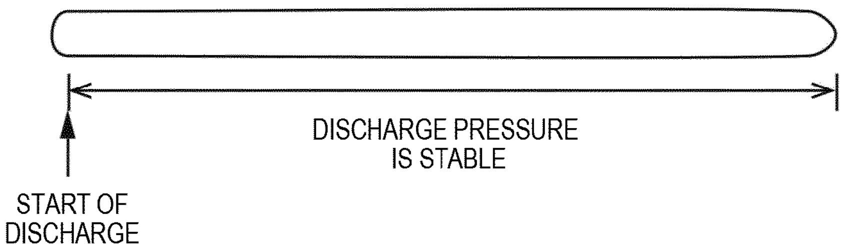
DISCHARGE PRESSURE
IS STABLE
START OF
DISCHARGE

FIG. 10

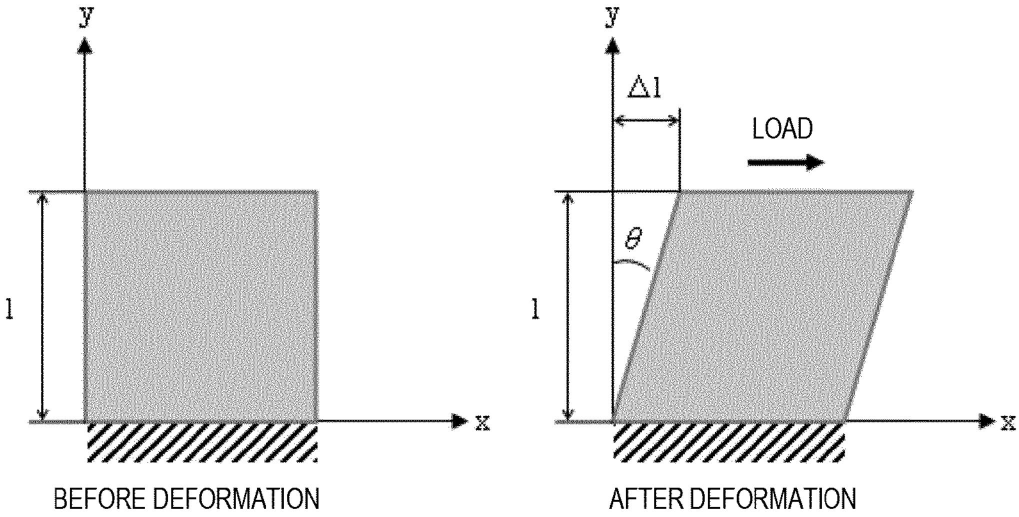

**INTERNATIONAL SEARCH REPORT**

International application No.
PCT/JP2019/043738

A. CLASSIFICATION OF SUBJECT MATTER
C08J 9/12(2006.01)i; B05D 7/24(2006.01)i
FI: C08J9/12 GEY; B05D7/24 301R; B05D7/24 301T; B05D7/24 301V

According to International Patent Classification (IPC) or to both national classification and IPC

B. FIELDS SEARCHED

Minimum documentation searched (classification system followed by classification symbols)
C08J9/00-9/42; B05D1/00-7/26; B29C44/00-44/60; B29C67/20; C08K3/00-13/08; C08L1/00-101/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2004/060628 A1 (SUNSTAR ENGINEERING INC.) 22.07.2004 (2004-07-22) claims, examples, fig. 1 | 1-7<br>8 |
| Y | JP 2017-109192 A (THREEBOND CO., LTD.) 22.06.2017 (2017-06-22) claims | 8 |
| A | JP 2010-039358 A (CANON INC.) 18.02.2010 (2010-02-18) paragraphs [0057]-[0068], fig. 8 | 1-8 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>24 January 2020 (24.01.2020) | Date of mailing of the international search report<br>04 February 2020 (04.02.2020) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2019/043738

| Patent Documents referred in the Report | Publication Date | Patent Family | Publication Date |
|---|---|---|---|
| WO 2004/060628 A1 | 22 Jul. 2004 | US 2006/0148909 A1 claims, examples, fig. 1<br>EP 1591219 A1<br>KR 10-2005-0111578 A<br>CN 1723107 A | |
| JP 2017-109192 A | 22 Jun. 2017 | (Family: none) | |
| JP 2010-039358 A | 18 Feb. 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004060628 A
- JP S61133201 A
- JP H1180250 A
- JP 2000038404 A
- JP 2001271055 A
- JP 2002069121 A
- JP 2018219339 A